(19) **Europäisches Patentamt**
**European Patent Office**
**Office européen des brevets**

(11) **EP 2 797 274 B1**

(12) **EUROPEAN PATENT SPECIFICATION**

(45) Date of publication and mention
of the grant of the patent:
**12.06.2019 Bulletin 2019/24**

(51) Int Cl.:
***H04L 27/26*** *(2006.01)*

(21) Application number: **13165384.2**

(22) Date of filing: **25.04.2013**

(54) **Cognitive full spectrum access based on FFT permutation waveforms**

Kognitiver Vollspektrumszugang basierend auf FFT-Permutationswellenformen

Accès à un spectre cognitif complet sur la base de formes d'ondes obtenues par permutation de FFT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014 Bulletin 2014/44**

(73) Proprietor: **Fraunhofer-Gesellschaft zur
Förderung der
angewandten Forschung e.V.
80686 München (DE)**

(72) Inventors:
• **Venkatsubramaniam, Venkatkumar
14059 Berlin (DE)**
• **Haustein, Thomas
14469 Potsdam (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
• **Al-Dweik ET AL: "Joint Secured and Robust
Technique for OFDM Systems", , 10 December
2012 (2012-12-10), XP055092371, Retrieved from
the Internet: URL:http://arxiv.org/abs/1212.1969
[retrieved on 2013-12-09]**
• **"OFDM Transmission (Chapter 3)" In: Erik
Dahlman ET AL: "4G LTE/LTE-Advanced for
Mobile", 31 March 2011 (2011-03-31), Academic
Press, XP055469875, ISBN: 978-0-12-385489-6
pages 27-44,**

**Description**

The present invention relates to a new physical interface for a wireless channel access technique which is suitable for spectrum sharing cognitive radios.

Spectrum sharing cognitive radios become more and more important. Spectrum sharing cognitive radios are intelligent terminals, which are referred to as secondaries. Secondaries are capable of coexisting with radios known as primary terminals. Primary terminals are legacy devices operating in licensed frequency bands or unlicensed frequency bands. Moreover, secondaries are not (or almost not) affecting the communication of primary terminals which are already using the channels. For example, primaries may be transmitters emitting TV signals, e.g. DVBT (Digital Video Broadcasting - Terrestrial) signals.

A challenge in design of cognitive networks is to develop solutions which can be produced in an efficient way and which are transparent to the primary terminal's physical interface so that the primary receiver need not perform any additional operation. Solutions would be appreciated that are hidden to the primary medium access layer so that the communication of a primary terminal is unaffected. The solutions to be provided should have low overhead costs in terms of channel information and in terms of data exchange between the primary and secondary subsystems. Finally, a flexible architecture should be provided which can achieve high spectral efficiency in secondary communication because in some situations only a limited bandwidth may be available for the secondary.

So far the state of the art approaches this problem as an optimization problem on a set of narrow band channels and by assuming that both primary and secondary subsystems use the same interface. Using state of the art transceivers, each of the narrowband channels can be defined by a physical interface such as OFDM (Orthogonal Frequency-Division Multiplexing) or filtered OFDM and referred to as a subcarrier.

A signal that is transmitted in a subcarrier by a secondary is seen as interference by a primary on that subcarrier. To achieve optimization, power and bandwidth allocation may be performed on each subcarrier at the secondary transmitter. The state of the art proposes different ways to achieve optimization.

According to one method of the state of the art, the power allocation algorithm at the secondary transmitter takes channel gain information between all the terminals, i.e. primary to primary, secondary to secondary and also the cross links, secondary to primary and primary to secondary into account.

According to another method of the state of the art, channel state information of both gain and phase is used at the secondary transmitter and interference is cancelled at a primary receiver. According to this method, a secondary transmitter needs to collect channel state information from a primary receiver in floating point precision and needs to cancel interference using multi antenna beamforming.

If there is only an antenna at the secondary transmitter, according to the state-of-the art, a primary receiver may employ receiver beamforming. In that case, a primary receiver needs to perform additional operations which require additional hardware resources and/or computation time.

Al-Dweik ET AL, "Joint Secured and Robust Technique for OFDM Systems", (20121210), URL: http://arxiv.org/abs/1212.1969, (20131209) discloses a technique for joint secured and robust transmission of orthogonal frequency division multiplexing (OFDM) based communication systems. The proposed system is implemented by developing a new OFDM symbol structure based on symmetric key cryptography.

It would be desirable if improved concepts for wireless channel access techniques would be provided.

The object of the present invention is to provide improved concepts for wireless channel access techniques. The object of the present invention is solved by an apparatus according to claim 1, by a system according to claim 11, by a method according to claim 13 and by a computer program according to claim 15. In the following description, any embodiment(s) referred to and not falling within the scope of the appended claims, is (are) merely example(s) useful to the understanding of the invention.

An apparatus for generating a manipulated time-domain signal for transmitting a plurality of data symbols is provided. The apparatus comprises a modulation unit for modulating the data symbols on one or more first subcarriers, wherein the modulation unit is configured to not load the data symbols on one or more second subcarriers, wherein each of the one or more second subcarriers is different from each of the one or more first subcarriers. Moreover, the apparatus comprises a transformation unit for transforming the one or more first subcarriers and the one or more second subcarriers to a time-domain to obtain a transformed time-domain signal. Furthermore, the apparatus comprises a manipulation module for invertibly modifying the transformed time-domain signal according to a first modification rule to obtain the manipulated time-domain signal.

As said, the modulation unit is configured to not load the data symbols on one or more second subcarriers. This, e.g., means that the modulation unit is configured to not load modulated data symbols on one or more second subcarriers. This, e.g., also means to have zero energy on one or more second subcarriers at the transmitter.

According to an embodiment, the transformed time-domain signal may comprise a plurality of samples, wherein each of the time-domain samples comprises a sample value, wherein the manipulation module may be a permutation module being configured to invertibly modify the transformed time-domain signal according to the first modification rule by applying a permutation rule on the sample values of two or more of the time-domain samples of the transformed time-domain signal, so that the sample value of each of the two or more time-domain samples is assigned to a different time-domain sample of the two or more time-domain samples to obtain a sample value for two or more of the time-domain samples of the intermediate time-domain signal.

According to an embodiment, the permutation rule is a permutation sequence, and the permutation module is configured to apply the permutation sequence depending on a carrier frequency of operation.

In other embodiments, instead of a permutation rule, any kind of a linear combination may be employed.

In an embodiment, the manipulation module may be configured to invertibly modify the transformed time-domain signal according to the first modification rule, so that a first spectrum of the transformed time-domain signal is different from a second spectrum of the manipulated time-domain signal.

According to another embodiment, the manipulation module may be configured to invertibly modify the transformed time-domain signal according to the first modification rule to obtain an intermediate time-domain signal. The manipulation module may furthermore be configured to add a cyclic prefix to the intermediate time-domain signal to obtain the manipulated time-domain signal.

In another embodiment, the above-described apparatus may further comprise a pilot modulator for modulating a pilot sequence on one or more third subcarriers. Moreover, the apparatus may further comprise a pilot transformer for transforming the one or more third subcarriers to the time-domain to obtain a pilot time portion of the transformed time-domain signal. Furthermore, the manipulation module may be configured to not invertibly modify the pilot time portion of the transformed time-domain signal according to the first modification rule.

Moreover, an apparatus for generating a multi-user signal is provided. The apparatus for generating a multi-user signal comprises a first apparatus for generating a first manipulated time-domain signal as a first manipulated single-user signal, wherein the transformation unit of the first apparatus is configured to obtain the transformed time-domain signal of the first apparatus as a first transformed time-domain signal, wherein the first transformed time-domain signal comprises a plurality of first time-domain samples, wherein each of the first time-domain samples comprises a sample value. Furthermore, apparatus for generating a multi-user signal comprises a second apparatus for generating a second manipulated time-domain signal as a second manipulated single-user signal, wherein the transformation unit of the second apparatus is configured to obtain the transformed time-domain signal of the second apparatus as a second transformed time-domain signal, wherein the second transformed time-domain signal comprises a plurality of second time-domain samples, wherein each of the second time-domain samples comprises a sample value. Moreover, the apparatus for generating a multi-user signal comprises a combination unit for combining the first manipulated single-user signal and the second manipulated user signal to obtain the multi-user signal. The manipulation module of the first apparatus is configured to apply a first permutation sequence on the sample values of two or more of the first time-domain samples of the first transformed time-domain signal. Moreover, the manipulation module of the second apparatus is configured to apply a second permutation sequence on the sample values of two or more of the second time-domain samples of the second transformed time-domain signal. Furthermore, the first permutation sequence is different from the second permutation sequence.

According to an embodiment, the transformation unit of the first apparatus is configured to transform the one or more first subcarriers and the one or more second subcarriers to the time-domain by employing an M-point FFT. The manipulation module of the first apparatus is configured to apply the permutation sequence dependent on the value M of the M-point FFT. The transformation unit of the second apparatus is configured to transform the one or more first subcarriers and the one or more second subcarriers to the time-domain by employing the M-point FFT. And, the manipulation module of the second apparatus is configured to apply the permutation sequence dependent on the value M of the M-point FFT.

In an embodiment, the apparatus for generating a multi-user signal is configured to employ Security Enhanced PFFT signaling.

Moreover, an apparatus for demodulating a received time-domain signal to obtain a plurality of data symbols is provided. The transformed time-domain signal has been generated by modulating the data symbols on one or more first subcarriers, and by not modulating the data symbols on one or more second subcarriers, by transforming the one or more first subcarriers and the one or more second subcarriers to a time-domain to obtain a transformed time-domain signal, and by invertibly modifying the transformed time-domain signal according to a first modification rule to generate the received time-domain signal.

The apparatus for demodulating a received time-domain signal comprises an inverse manipulator, an inverse transformer, and a demodulation unit for demodulating the one or more first subcarriers to obtain the plurality of data symbols.

The inverse manipulator is configured to modify the received time-domain signal according to a second modification rule, being an inverse rule of the first modification rule, to obtain the manipulated time-domain signal, and the inverse transformer is configured to transform the manipulated time-domain signal from a time-domain to a spectral domain to obtain the one or more first subcarriers. Or, the inverse transformer is configured to transform the received time-domain signal from a time-domain to a spectral domain to obtain an intermediate spectral-domain signal, and the inverse manipulator is configured to modify the intermediate spectral-domain signal according to a second modification rule, being an inverse rule of the first modification rule, to obtain the one or more first subcarriers.

In another embodiment, the inverse manipulator is configured to apply a permutation rule on the received time-domain signal or on the intermediate spectral-domain signal.

According to another embodiment, the apparatus for demodulating a received time-domain signal may be configured to remove a cyclic prefix from the received time-domain signal to obtain an intermediate time-domain signal.

Moreover, a system is provided. The system comprises an apparatus for generating a manipulated time-domain signal according to one of the above-described embodiments and an apparatus for demodulating a received time-domain signal according to one of the above-described embodiments. The apparatus for generating a manipulated time-domain signal is configured to generate a manipulated time-domain signal for transmitting a plurality of data symbols according to the first modification rule, the first modification rule being the first modification rule of the apparatus for demodulating a received time-domain signal. Moreover, the apparatus for generating a manipulated time-domain signal comprises a transmitter for transmitting the manipulated time-domain signal. The apparatus for demodulating a received time-domain signal comprises a receiver for receiving the manipulated time-domain signal, being transmitted by the transmitter of the apparatus for generating a manipulated time-domain signal, as a received time-domain signal. Moreover, the apparatus for demodulating a received time-domain signal is configured to demodulate the received time-domain signal to obtain the, plurality of data symbols.

Moreover, a method for generating a manipulated time-domain signal for transmitting a plurality of data symbols is provided. The method comprises:

- Modulating the data symbols on one or more first subcarriers, and not modulating the data symbols on one or more second subcarriers, wherein each of the one or more second subcarriers is different from each of the one or more first subcarriers.

- Transforming the one or more first subcarriers and the one or more second subcarriers to a time-domain to obtain a transformed time-domain signal. And:

- Invertibly modifying the transformed time-domain signal according to a first modification rule to obtain the manipulated time-domain signal.

Furthermore, a method for demodulating a received time-domain signal to obtain a plurality of data symbols is provided. The transformed time-domain signal has been generated by modulating the data symbols on one or more first subcarriers, and by not modulating the data symbols on one or more second subcarriers, by transforming the one or more first subcarriers and the one or more second subcarriers to a time-domain to obtain a transformed time-domain signal, and by invertibly modifying the transformed time-domain signal according to a first modification rule to generate the received time-domain signal.

The method comprises the steps:

- Modifying the received time-domain signal according to a second modification rule, being an inverse rule of the first modification rule, to obtain the manipulated time-domain signal.

- Transforming the manipulated time-domain signal from a time-domain to a spectral domain to obtain the one or more first subcarriers. And:

- Demodulating the one or more first subcarriers to obtain the plurality of data symbols.

Or, the method comprises the steps:

- Transforming the received time-domain signal from a time-domain to a spectral domain to obtain an intermediate spectral-domain signal.

- Modifying the intermediate spectral-domain signal according to a second modification rule, being an inverse rule of the first modification rule, to obtain the one or more first subcarriers. And:

- Demodulating the one or more first subcarriers to obtain the plurality of data symbols.

Furthermore, a computer program for implementing one of the above-described methods, when being executed by a computer or signal processor, is provided.

The concepts of the above-described embodiments exhibit significant advantages.

At first, trace invariance is provided. The average total interference (e.g. the sum of received powers over all subcarriers) over all the frequency subcarriers is invariant upon averaging over all the data symbols. Thus, if $H$ is the circulant channel that is represented in a time domain, if $F$ is the DFT (Discrete Fourier Transform) matrix and if $P$ is the permutation matrix, the following formula results:

$$T = E_X[Trace[HPFXX^H F^H P^H H^H]] \cong Trace[HPFF^H P^H H^H] = Trace[HH^H],$$

where the matrix $P$ denotes the row permutations of F. $X$ is the ensemble matrix of dimension $N$ x $S$, where N is the number of samples for FFT (Fast Fourier Transform), e.g. N-point FFT, and wherein $S$ is number of such N-point sequences. The above-mentioned property holds for an asymptotically large value of $S$. Thus, the average total interference at a primary receiver is invariant and independent of the permutation matrix. However, the distribution of the interference varies with the permutation matrix.

Another advantage is that therefore, there is no additional interference that is generated, but interference is merely spread over the frequency domain.

A further advantage is low latency. There are no addition or multiplication operations involved at the transmitter to perform the permutation operation. The equalizer at the receiver, however, does incur more complexity as compared to state-of-the art receivers because one more equalization (e.g. inversion) is done for PFFT (Permuted FFT) equalizer.

Another advantage is that physical layer (PHY layer) encryption is provided. The proposed technique provides a method for encryption at the physical layer at signal level in addition to the bit level encryption at the higher layers. This is particular advantageous, as the physical layer exhibits low complexity.

A further advantage is that less feedback is necessary. The need for extra dedicated feedback regarding channel gain and also channel phase from a primary receiver to a secondary transmitter is not necessary for the functioning of the proposed method.

Another advantage is legacy compatibility. Legacy devices need not perform any additional operation. Therefore the proposed method is backward compatible to legacy devices in terms of interference. Because the interference is spread to noise floor, no additional medium access mechanisms are assumed with the primary.

In an embodiment, secrecy is provided by providing an encryption concept. In particular, a concept is provided, wherein a permutation sequence is used to encrypt data by applying it post FFT at the signal level. The sequence may be kept secret by the secondary system from all other networks and network nodes and used as an encryption key at the physical layer. This effectively means that without the knowledge of the permutation sequence, an attacker cannot detect the secondary signal. Instead, an attacker has to generate all possible permutation sequences to be able to identify that a signal is present in that bandwidth, which may prove to be expensive in computation and time for an attacker.

Moreover, according to embodiments, time dependent permutation is provided. In particular, a concept is provided by which permutation sequences can be varied in a time dependent manner. This can be done for two reasons: For randomizing the interference in both time and frequency and for that an attacker would have to identify new sequences in order to be able to attack.

Furthermore, embodiments provide a concept by which a secondary system (base station, equipment or a controller) can disclose the permutation sequence to another trusted network or entity, which may belong to or be accessed by another secondary or primary. In case the permutation sequence is disclosed, the trusted network can use it for interference cancellation. There may be incentives in place for a secondary system for disclosing the permutation sequence.

In embodiments, the secondary transmitter may acquire timing information from primary receiver(s) so that the secondary's signal is not synchronized within the cyclic prefix at the primary. This effectively and purposely introduces intersymbol interference to the secondary signal at the primary receiver. The amount of permutation that is required at the secondary transmitter for spreading the sparse signal is a function of this timing mismatch. A small mismatch requires a large degree of permutation, while a large mismatch (e.g. half the symbol length) may employ permutations of a smaller order. However, even in case of a large mismatch, permutations are needed if the input signal is sparse.

In other embodiments, a permutation sequence may be applied dependent on the carrier frequency of operation.

In further embodiments, reference pilot signals of the secondary may not be permuted for channel estimation purposes at the receiver.

In another embodiment, a concept is provided by which a PFFT signal is generated for single and multiple users.

According to another embodiment, a concept is provided by which a linear receiver structure defined by $F$ $P^{-1}F^{-1}D^{-1}F$ is applied.

Furthermore, according to embodiments, a method and an algorithm is provided by which SIC receiver is applied based on permutation sequence and their respective sparse loading ratio.

Moreover, according to embodiments, a concept is provided for generating a precoded PFFT-OFDMA (Orthogonal Frequency Division Multiple Access) signal.

Furthermore, in embodiments, a concept is provided by which Permuted DFT spread OFDMA signal is generated.

Moreover, according to embodiments, a concept is provided by which M-point FFT to N-point FFT mapping is performed.

Furthermore, according to embodiments, a receiver structure is provided to detect the Precoded PFFT-OFDMA signals.

According to another embodiment, the pattern of permutation sequences can be dependent on the value M in the M-point FFT. The value of M in M-point FFT of a user is turn can be mapped to a user ID and can be kept secret from all other network entities and users.

In other embodiments, concepts are provided which employ an architecture called Security Enhanced PFFT Signaling, as will be described below.

In further embodiments, unicast permutation messages are used for secure transmission as described below.

In the following, embodiments of the present invention are described in more detail with reference to the figures, in which:

Fig. 1a    illustrates an apparatus for generating a manipulated time-domain signal for transmitting a plurality of data symbols according to an embodiment,

Fig. 1b    illustrates an apparatus for demodulating a received time-domain signal to obtain a plurality of data symbols according to an embodiment,

Fig. 1c    illustrates an apparatus for demodulating a received time-domain signal to obtain a plurality of data symbols according to another embodiment,

Fig. 1d    illustrates an apparatus for generating a manipulated time-domain signal for transmitting a plurality of data symbols according to another embodiment, wherein the apparatus further comprises a pilot modulator for modulating a pilot sequence on one or more subcarriers,

Fig. 1e    illustrates an apparatus for generating a multi-user signal according to an embodiment,

Fig. 1f    illustrates a system according to an embodiment comprising an apparatus for generating a manipulated time-domain signal according to an embodiment and an apparatus for demodulating a received time-domain signal according to an embodiment,

Fig. 2    illustrates a system level depiction according to an embodiment,

Fig. 3    illustrates an apparatus for generating a manipulated time-domain signal according to another embodiment depicting functional blocks,

Fig. 4    illustrates an apparatus for demodulating a received time-domain signal according to an embodiment depicting functional blocks,

Fig. 5    illustrates an apparatus for generating a manipulated time-domain signal signal according to a further embodiment depicting a transmitter-side structure for a permuted FFT,

Fig. 6    illustrates a receiver at a primary according to the state of the art,

Fig. 7    illustrates an apparatus for demodulating a received time-domain signal to obtain a plurality of data symbols employing permuted FFT according to another particular embodiment,

Fig. 8    illustrates an apparatus for generating a manipulated time-domain signal for transmitting a plurality of data symbols, wherein the apparatus further comprises a pilot modulator for modulating a pilot sequence on one or more subcarriers, according to a further embodiment,

Fig. 9    illustrates a transmitter structure for multi-user access according to an embodiment,

Fig. 10    illustrates a receiver structure for multi-user access according to an embodiment,

Fig. 11    illustrates an SIC receiver structure for a shared sequence according to an embodiment,

Fig. 12    illustrates a permutation FFT as a precoded OFDM signal according to an embodiment,

Fig. 13    illustrates transmitter functional blocks of PFFT-OFDMA modulation according to an embodiment,

Fig. 14    illustrates a linear receiver architecture for PFFT-OFDMA modulation according to an embodiment,

Fig. 15    illustrates functional blocks for permuted DFT precoded modulation according to an embodiment, and

Fig. 16    illustrates unicast RRM Layer 1 Control Signalling according to an embodiment.

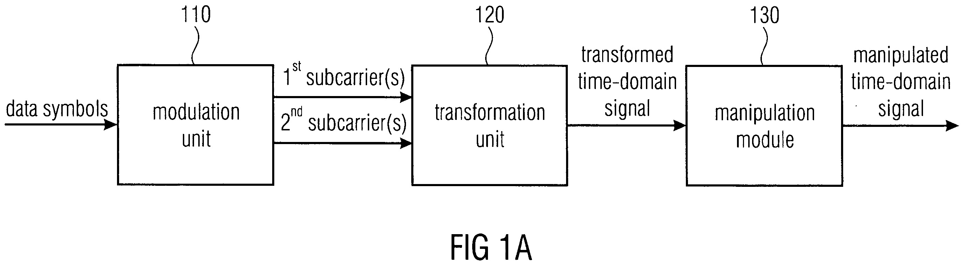

Fig. 1a illustrates an apparatus for generating a manipulated time-domain signal for transmitting a plurality of data symbols according to an embodiment.
The apparatus comprises a modulation unit 110 for modulating the data symbols on one or more first subcarriers. The modulation unit 110 is configured to not modulate the data symbols on one or more second subcarriers, wherein each of the one or more second subcarriers is different from each of the one or more first subcarriers.
Moreover, the apparatus comprises a transformation unit 120 for transforming the one or more first subcarriers and the one or more second subcarriers to a time-domain to obtain a transformed time-domain signal.
Furthermore, the apparatus comprises a manipulation module 130 for invertibly modifying the transformed time-domain signal according to a first modification rule to obtain the manipulated time-domain signal.

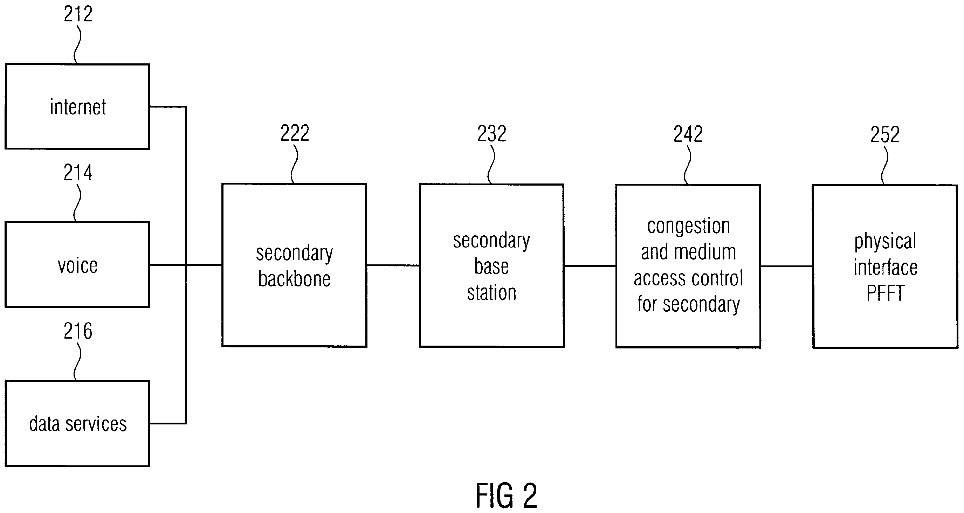

Fig. 2 illustrates a system level depiction according to an embodiment, At first, in Fig. 2, a layered architecture of the cognitive secondary network is considered. The Permuted Fast Fourier Transform (Permuted FFT or PFFT) physical interface 252, provided by embodiments of the present invention, is employed at the secondary transmitter.
In the layered architecture of a cognitive secondary network of Fig. 2, internet 212, voice 214 and data services 216 employ a secondary backbone 222 which is provided at a secondary base station 232. The secondary base station 232 uses services of a congestion and medium access control 242. The congestion and medium access control 242 itself accesses the physical interface 252. The physical interface of Fig. 2 is the Permuted Fast Fourier Transform (Permuted FFT or PFFT) physical interface 252 of embodiments of the present invention.

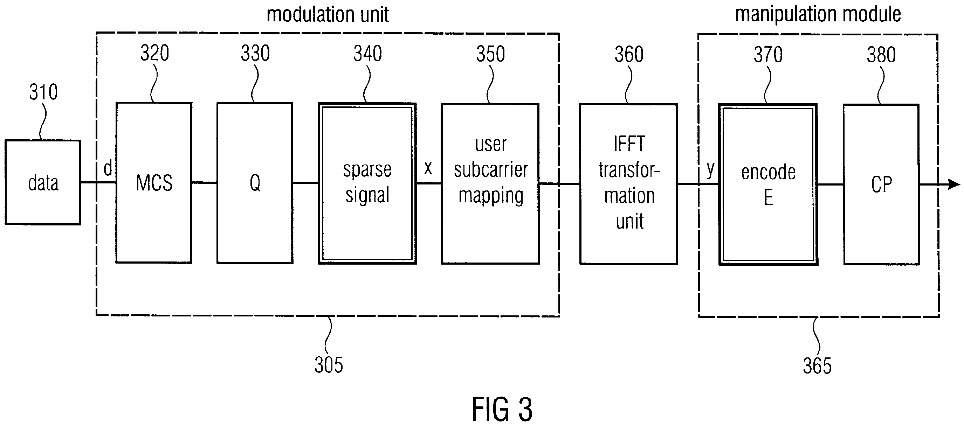

Fig. 3 illustrates an apparatus for generating a manipulated time-domain signal for transmitting a plurality of data symbols according to a particular embodiment. In particular, Fig. 3 illustrates the functional blocks of the encoded Fast Fourier Transform (FFT) interface (transmitter functional blocks). The functionalities of the functional blocks in Fig. 3 will now briefly be described.
The functional block "Data" 310 represents information to be sent to a receiving radio terminal in bits. When be passed over to functional block 320, the information to be sent may be represented as a bit stream d. The transmitting terminal can e.g. be a base station, user equipment, or a relay. The data symbols can also be a result of a pre-modulation such as single-carrier FDMA or code-division multiple access (CDMA) spreading codes. In other cases, the data symbols can simply be binary symbols.
The functional block "MCS" 320 is configured to apply a modulation and coding scheme to the bit stream d that shall be transmitted to the receiving radio terminal.
The functional block "Q" 330 applies at least one precoding matrix on the user symbols. The at least one precoding matrix may be computed based on some performance criteria, for example minimum mean squared error or Shannon capacity formula. The modulation unit can also assign power values through the block Q.
The "Sparse Signal" block 340 computes the number of subcarriers to be loaded and the power allocation on those subcarriers.
The "user subcarrier mapping" block 350 decides the user and subcarrier pairing that is used for transmitting the signals. The selected subcarriers are the one or more first subcarriers on which the data symbols are modulated.
Thus, the blocks 320, 330, 340, 350 together form a modulation unit 305 for modulating the data symbols on one or more first subcarriers. The modulation unit 305 is configured to not modulate the data symbols on one or more second subcarriers, wherein each of the one or more second subcarriers is different from each of the one or more first subcarriers.
Moreover, the "IFFT" block 360 performs an Inverse Discrete Fourier Transformation on the modulated coding symbols. The "IFFT" block is a transformation unit for transforming the one or more first subcarriers (on which the data symbols have been modulated) and one or more second subcarriers (on which the data symbols have not been modulated) to a time-domain to obtain a transformed time-domain signal.
Furthermore, Fig. 3 illustrates a manipulation module 365 for invertibly modifying the transformed time-domain signal according to a first modification rule to obtain the manipulated time-domain signal.

According to the embodiment of Fig. 3, the manipulation module 365 is configured to invertibly modify the transformed time-domain signal, e.g. according to a first modification rule, to obtain an intermediate time-domain signal. Moreover, the manipulation module is furthermore configured to add a cyclic prefix to the intermediate time-domain signal to obtain the manipulated time-domain signal.

For this purpose, the manipulation module 365 comprises an encoder E 370 and a CP block 380.

The encoder "E" 370 applies an encoding function after the IFFT.

The "CP" block 380 adds a cyclic prefix (CP) to make the signal structure circulant, so that the receiver will receive a circulant structure.

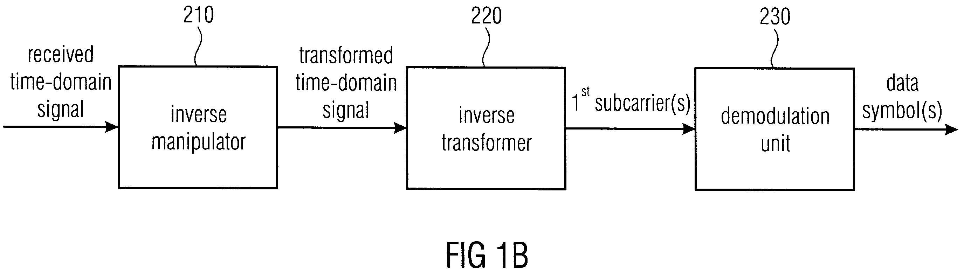

Fig. 1b illustrates an apparatus for demodulating a received time-domain signal to obtain a plurality of data symbols according to an embodiment. The transformed time-domain signal has been generated by modulating the data symbols on one or more first subcarriers, and by not modulating the data symbols on one or more second subcarriers, by transforming the one or more first subcarriers and the one or more second subcarriers to a time-domain to obtain a transformed time-domain signal, and by invertibly modifying the transformed time-domain signal according to a first modification rule to generate the received time-domain signal.

The apparatus for demodulating a received time-domain signal comprises an inverse manipulator 210, an inverse transformer 220 and a demodulation unit 230.

The inverse manipulator 210 is configured to modify the received time-domain signal according to a second modification rule, being an inverse rule of the first modification rule, to obtain the manipulated time-domain signal.

The inverse transformer 220 is configured to transform the manipulated time-domain signal from a time-domain to a spectral domain to obtain the one or more first subcarriers.

The demodulation unit 230 is configured to demodulate the one or more first subcarriers to obtain the plurality of data symbols.

For example, the inverse manipulator 210 may be configured to apply a permutation rule, e.g., a permutation matrix, as the second modification rule on the received time-domain signal.

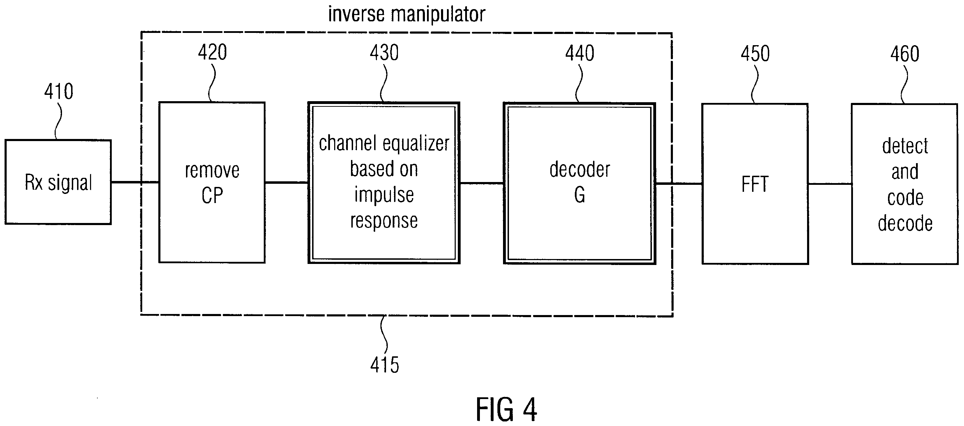

Fig. 4 illustrates an apparatus for demodulating a received time-domain signal to obtain a plurality of data symbols according to a particular embodiment. In particular, Fig. 4 illustrates functional blocks of such an apparatus (the receiver side) according to an embodiment. Inter alia, Fig. 4 illustrates the corresponding operations of the functional blocks.

In Fig. 4, an "Rx signal" block 410 is illustrated representing the signal received at the receiver.

Moreover, Fig. 4 illustrates an inverse manipulator 415 for modifying the received time-domain signal to obtain the manipulated time-domain signal.

The inverse manipulator 415 of Fig. 4 is configured to remove a cyclic prefix from the received time-domain signal to obtain an intermediate time-domain signal. Moreover, the inverse manipulator 415 is furthermore configured to modify the intermediate time-domain signal according to the second modification rule to obtain the transformed time-domain signal.

For this purpose, the inverse manipulator 415 of Fig. 4 comprises a "Remove CP" block 420, a "Channel Equalizer" block 430 and a a "Decoder G" 440 for decoding.

The "Remove CP" block 420 is configured to remove at the receiver side the cyclic prefix (CP), e.g. added by the "CP" block 380 of Fig. 3.

The "Channel Equalizer" block 430 is configured to conduct channel equalization based on impulse responses.

The "Decoder G" 440 is configured for decoding.

Furthermore, Fig. 4 illustrates an FFT block 450 for performing Fast Fourier Transformation (FFT). The FFT block 450 is an inverse transformer, e.g. as described with reference to Fig. 1b, for transforming a manipulated time-domain signal from a time-domain to a spectral domain, frequency domain or time-frequency domain to obtain the one or more first subcarriers.

Moreover, Fig. 4 comprises a "Detect and code decode" block 460 for obtaining at the receiver the bit stream d that was encoded and transmitted by the transmitter. The "Detect and code decode" block 460 is a demodulation unit, e.g. as described with reference to Fig. 1b, for demodulating the one or more first subcarriers to obtain the plurality of data symbols.

Returning to the apparatus for generating a manipulated time-domain signal for transmitting a plurality of data symbols of Fig. 1a, in the following, Permuted FFT (PFFT) is considered. Considering the Permuted FFT, a permutation rule may be employed to invertibly modify the transformed time-domain signal of Fig. 1a.

For example, according to an embodiment, the transformed time-domain signal comprises a plurality of samples, wherein each of the time-domain samples comprises a sample value, wherein the manipulation module may be a permutation module being configured to invertibly modify the transformed time-domain signal according to the first modification rule by applying a permutation rule on the sample values of two or more of the time-domain samples of the transformed time-domain signal, so that the sample value of each of the two or more time-domain samples is assigned to a different time-domain sample of the two or more time-domain samples to obtain a sample value for two or more of the time-domain samples of the intermediate time-domain signal.

Regarding Fig. 3, an encoding function $E$ is performed by block 370 after the IFFT. A simple encoding function is a permutation operation (a permutation rule). Therefore the provided concept of applying an permutation rule (e.g. conducting a permutation operation) is referred to as "permuted FFT" or "PFFT". This encoding function can be represented by a permutation matrix $E\text{-} \rightarrow \mathbf{P}$ and decoding function $\mathbf{G}\text{-} \rightarrow \mathbf{P}^{-1}$.

Other techniques of encoding functions (encoding functions other than permutation rules) are convolutional codes, block codes or random unitary matrices. In each case, a suitable decoding function G needs to be used at the receiver. These techniques incur high computational cost at the transmitter as compared to permutations because they may need multiplication operations in floating point precision. This would result in increased latency at the transmitter.

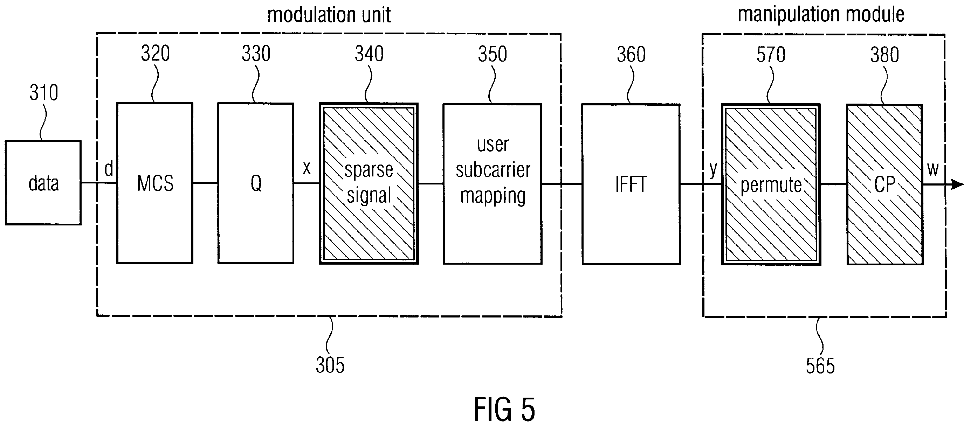

Fig. 5 illustrates an apparatus for generating a manipulated time-domain signal for transmitting a plurality of data symbols according to another particular embodiment. In particular, Fig. 5 illustrates a structure on a transmitter side for a permuted FFT signal according to an embodiment. In the case of permuted FFT, the functional block diagram resembles the description as shown in Fig. 5. The encoding block of the manipulation module 565 of Fig. 5 is a permutation module 570.

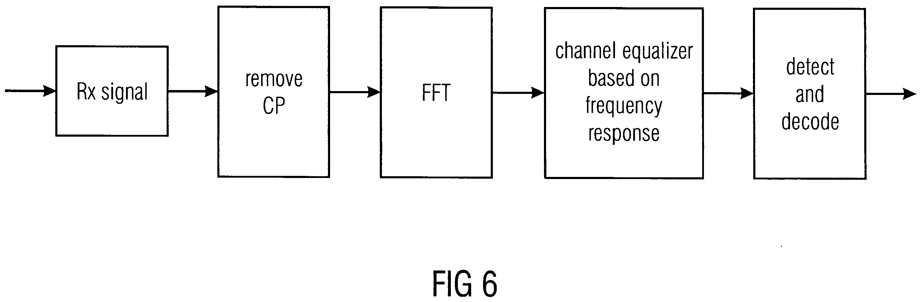

To illustrate the difference, Fig. 6 illustrates a receiver at a primary according to the state of the art. In particular, Fig. 6 depicts a state of the art architecture of an OFDM receiver which is employed in standards such as 802.11 WLAN, 802.16 Wimax and 3GPP LTE.

The proposed architecture of the embodiment of Fig. 5 introduces a permutation sequence that is provided with the aim to structure interference like noise at existing receivers (legacy devices) which are equipped with architecture as in Fig. 6.

The permutation rule to be applied the (transformed time-domain) signal y, provided by the transformation unit 360, has a spreading property.

This spreading property is evident from the fact that with a proper choice of permutation matrix $P$, the following equation is obtained:

$$F\ H_{SP}PF^{-1} \neq D \quad,$$

where $F$ is the N-point DFT matrix and $P$ is the permutation matrix at the secondary transmitter and $D$ denotes a diagonal matrix. $H_{SP}$ is a circulant channel matrix between a secondary transmitter and a primary receiver. The state-of-the-art OFDM systems exploit the property

$$F\ H_{SP}F^{-1} = D$$

and thus localizes the user data to subcarriers (because $D$ is diagonal).

The functional block 340, which is referred to as "sparse signal" in Fig. 5, computes the number of subcarriers that is used by the secondary.

A highly sparse signal (with only a few Subcarriers loaded) in large operational bandwidth will reduce the interference per subcarrier (to be known as interference power spectral density) at a legacy primary receiver. With proper selection of sparsity the interference signal can be limited to the noise floor at legacy devices. Thus a useful and decodable signal in a particular subcarrier for the secondary receiver appears at the noise floor over all the subcarriers at a primary receiver.

Thus a sparsity factor is defined as

$$\theta = \frac{N_{\sec ondary}}{B_{primary}}$$

where $N_{secondary}$ is the total bandwidth of all non zero (loaded) subchannels of a secondary and $B_{primary}$ is the bandwidth of the primary over which the secondary signal is spread.

This effectively means that the input to the IFFT, denoted as x is made sparse and a desired power level is employed based on the secondary link budget. However the perceived interference at a receiver is not sparse and is suppressed to the noise floor.

By this way, two main goals are achieved. First of all, the primary receiver does not need to perform any additional computation the secondary is transparent to the primary physical interface as noise. Moreover, the interference signal appears at the noise floor at the primary receiver and therefore does not affect the medium access layer of the primary. This is because the interference is randomized as white noise which does not channel block any subcarrier.

For performance enhancement, the functional module 350 called subcarrier mapping assigns the subcarriers to users based on the channel gain feedback from a secondary receiver to transmitter. Thus, use is made of multi user diversity and load to a user based on channel quality in a subcarrier.

In other words, in the embodiment illustrated by Fig. 5, the manipulation module 565 is configured to invertibly modify the transformed time-domain signal **y** according to a first modification rule, so that a first spectrum of the transformed time-domain signal is different from a second spectrum of the manipulated time-domain signal.

Consider that each of the one or more first subcarriers is assigned to one of a plurality of first frequency portions of the first spectrum (this wording, e.g., means that when, e.g., one of the first subcarriers has a bandwidth of 15 kHz as in LTE, e.g. range from 2671030 to 2671045 kHz kHz then this one of the first subcarriers is assigned to the first frequency portion from from 2671030 to 2671045 kHz of the first spectrum).

Other example may relate to WLAN signals and WLAN subcarriers located in 2.4 GHz frequency carrier on a 20 MHz bandwidth.

After transformation to the time domain and after invertibly modifying the transformed time-domain signal according to the first modification rule, the obtained manipulated time-domain signal has a second spectrum being different from the first spectrum.

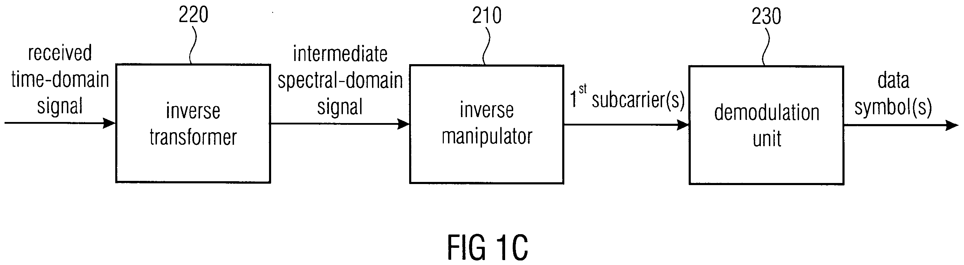

Fig. 1c illustrates an apparatus for demodulating a received time-domain signal to obtain a plurality of data symbols according to another embodiment. The transformed time-domain signal has been generated by modulating the data symbols on one or more first subcarriers, and by not modulating the data symbols on one or more second subcarriers, by transforming the one or more first subcarriers and the one or more second subcarriers to a time-domain to obtain a transformed time-domain signal, and by invertibly modifying the transformed time-domain signal according to a first modification rule to generate the received time-domain signal.

The apparatus for demodulating a received time-domain signal comprises an inverse transformer 220, an inverse manipulator 210 and a demodulation unit 230.

The inverse transformer 220 is configured to transform the received time-domain signal from a time-domain to a spectral domain to obtain an intermediate spectral-domain signal.

The inverse manipulator 210 is configured to modify the intermediate spectral-domain signal according to a second modification rule, being an inverse rule of the first modification rule, to obtain the one or more first subcarriers.

The demodulation unit 230 is configured to demodulate the one or more first subcarriers to obtain the plurality of data symbols.

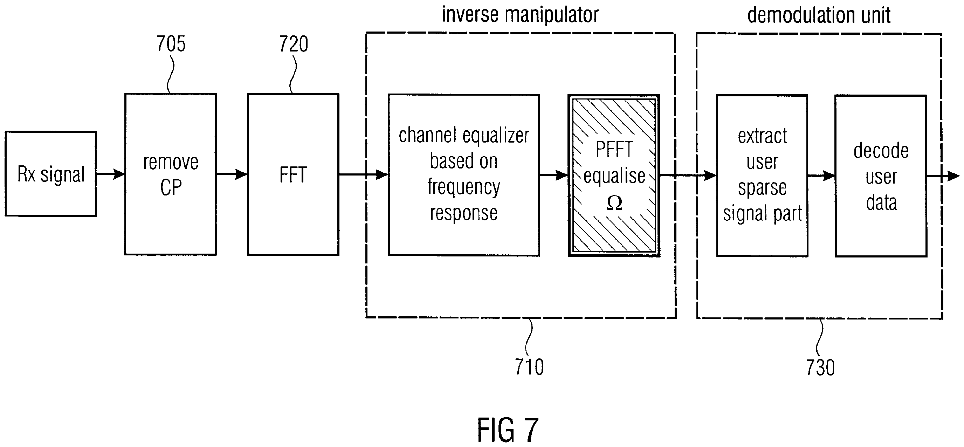

Fig. 7 illustrates an apparatus for demodulating a received time-domain signal to obtain a plurality of data symbols employing permuted FFT according to another particular embodiment. Thus, the explanations provided refer to a receiver-side. The apparatus comprises a unit 705 for removing a cyclic prefix, an inverse transformer 720, an inverse manipulator 710 and a demodulation unit 730.

In the embodiment, of Fig. 7, the inverse manipulator 710 is configured to apply a permutation rule, in particular, a permutation matrix $\Omega$, on an intermediate spectral-domain signal provided by the inverse transformer 720.

It should be noted that the channel matrix explained with reference to Fig. 5 is also circulant in time domain between secondary transmitter and the secondary receiver because of the cyclic prefix that is added. This circulant matrix in time domain is denoted $H_c$.

It is known that a circulant can be decomposed as

$$H_c = F^{-1}DF \ ,$$

where D is the channel response in frequency domain.

Thus the effective end-to-end channel taking into account the permutation at the transmitter becomes

$$\left( H_c PF^{-1} \right)^{-1} = F P^{-1} H_c^{-1} = F P^{-1} F^{-1} D^{-1} F .$$

It should be noted that the operation $D^{-1}F$ is already present in existing OFDM receiver, which implement a frequency domain equalizer after an FFT operation.

The correction term $\Omega = F P^{-1} F^{-1}$ is the additional term and it is proposed to take the correction term into account as the permutation structure.

This matrix $\Omega$, a permutation matrix, which is a permutation rule, can be pre-stored and thus the receiver just needs one more matrix multiplication. However, it should be noted that this term is not channel dependent. Thus, it is not required the inversion operation of impulse response matrix $H_c$ is performed in each time slot. Instead, preferably, multiplication with an already computed matrix $\Omega$ is proposed.

As already explained with reference to Fig. 5 for the apparatus generating a manipulated time-domain signal, in an embodiment of the apparatus for demodulating a received time-domain signal, the inverse manipulator 710 of the apparatus for demodulating a received time-domain signal may be configured to modify the received time-domain signal according to the second modification rule to obtain the transformed time-domain signal, so that a first spectrum of the transformed time-domain signal may be different from a second spectrum of the received time-domain signal. Each of the one or more first subcarriers is assigned to one of a plurality of first frequency portions of the first spectrum, wherein each of the one or more second subcarriers is assigned to one of a plurality of second frequency portions of the first spectrum, wherein each of the one or more first subcarriers is assigned to one of a plurality of third frequency portions of the second spectrum, wherein the third frequency portions of the second spectrum correspond to the first frequency portions of the first spectrum, wherein each of the one or more second subcarriers is assigned to one of a plurality of fourth frequency portions of the second spectrum, wherein the fourth frequency portions of the second spectrum correspond to the second frequency portions of the first spectrum. The inverse manipulator 710 may be configured to modify the received time-domain signal according to the second modification rule to obtain the transformed time-domain signal, so that a first energy of the plurality of the first frequency portions is greater than a third energy of the plurality of the third frequency portions, and so that a second energy of the plurality of the second frequency portions is smaller than a fourth energy of the plurality of the fourth frequency portions.

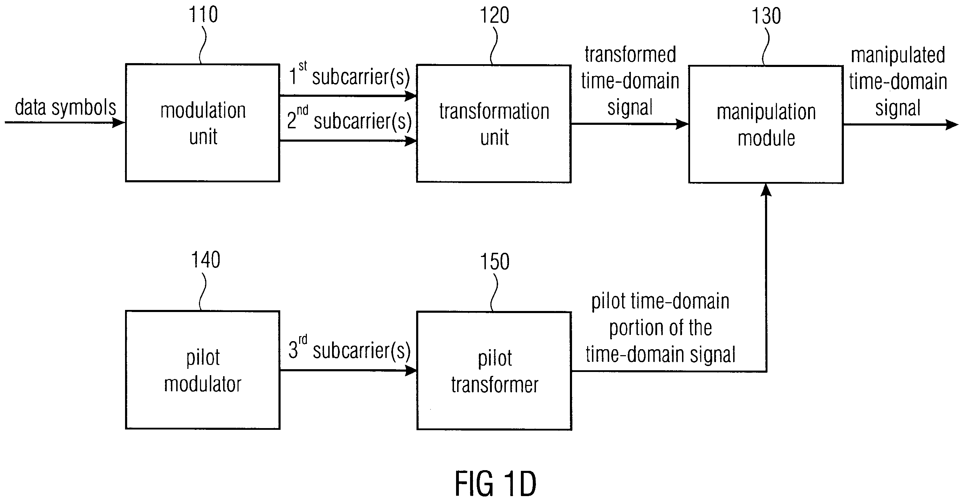

Fig. 1d illustrates an apparatus for generating a manipulated time-domain signal for transmitting a plurality of data symbols according to another embodiment, wherein the apparatus further comprises a pilot modulator for modulating a pilot sequence on one or more subcarriers.

Compared to the apparatus of Fig. 1a, the apparatus for generating a manipulated time-domain signal of Fig. 1d furthermore comprises a pilot modulator 140 for modulating a pilot sequence on one or more third subcarriers. Moreover, the apparatus further comprises a pilot transformer 150 for transforming the one or more third subcarriers to the time-domain to obtain a pilot time portion of the transformed time-domain signal. Furthermore, the manipulation module 130 of the apparatus of Fig. 1d is configured to not invertibly modify the pilot time portion of the transformed time-domain signal according to the first modification rule.

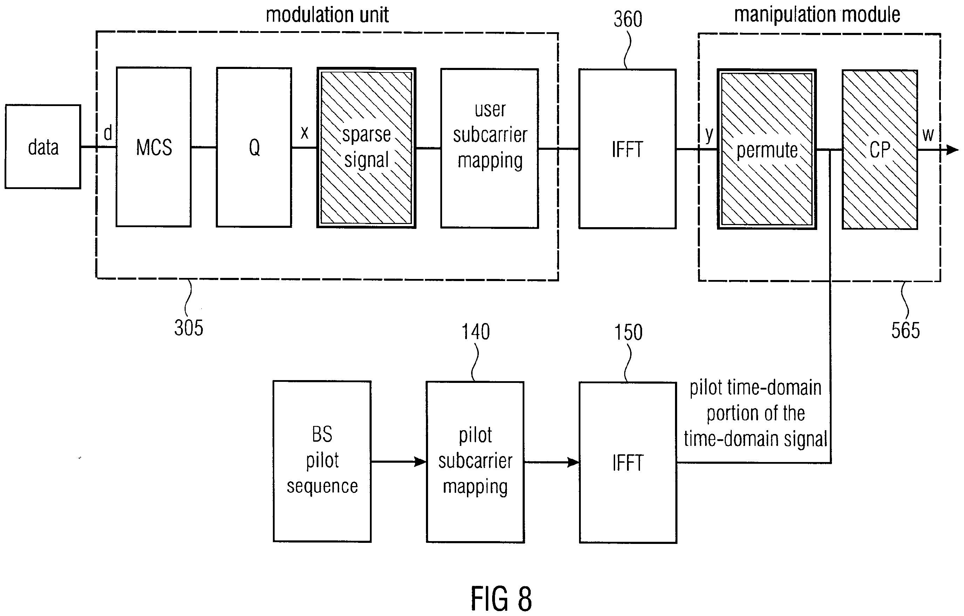

Fig. 8 illustrates an apparatus for generating a manipulated time-domain signal for transmitting a plurality of data symbols, wherein the apparatus further comprises a pilot modulator for modulating a pilot sequence on one or more subcarriers, according to a further embodiment. In particular, Fig. 8 illustrates a multiplexed transmission of a pilot sequence according to an embodiment.

The transmission of the pilot sequence is a kind of reference signal transmission. For proper decoding of the permuted FFT signal, channel knowledge is needed at the secondary receiver. For this purpose, reference signal transmission may be employed. In order for the secondary receiver to know the channel values on frequency bins, the transmission of reference pilots is done using conventional FFT without using the permutation sequence whereas the data symbols are transmitted using permuted FFT.

This sufficiency has the attractive feature that independent pilot sequences are not needed over the frequency bins. Furthermore, the overhead of pilot transmission can be limited because the adjacent channels of the frequency bins are correlated.

The computation of the PFFT equalizer on the other hand is possible by simple knowledge of the permutation sequence at the receiver.

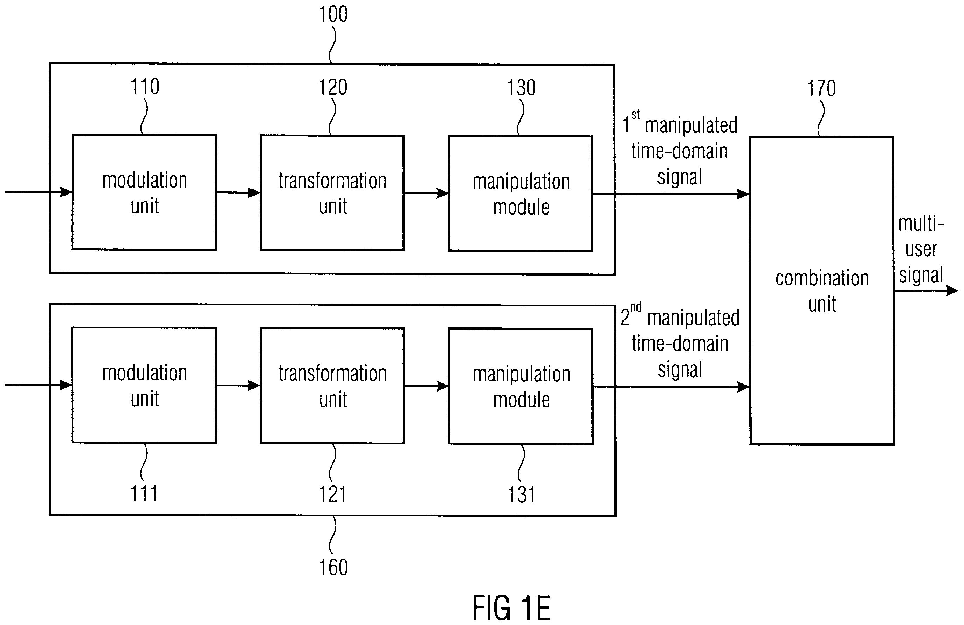

Fig. 1e illustrates an apparatus for generating a multi-user signal according to an embodiment.

The apparatus for generating a multi-user signal comprises a first apparatus 100 for generating a first manipulated time-domain signal as a first manipulated single-user signal, wherein the transformation unit 120 of the first apparatus 100 is configured to obtain the transformed time-domain signal of the first apparatus 100 as a first transformed time-domain signal, wherein the first transformed time-domain signal comprises a plurality of first time-domain samples, wherein each of the first time-domain samples comprises a sample value.

Furthermore, apparatus for generating a multi-user signal comprises a second apparatus 160 for generating a second manipulated time-domain signal as a second manipulated single-user signal, wherein the transformation unit 121 of the second apparatus 160 is configured to obtain the transformed time-domain signal of the second apparatus 160 as a second transformed time-domain signal, wherein the second transformed time-domain signal comprises a plurality of second time-domain samples, wherein each of the second time-domain samples comprises a sample value.

Moreover, the apparatus for generating a multi-user signal comprises a combination unit 170 for combining the first manipulated single-user signal and the second manipulated user signal to obtain the multi-user signal.

The manipulation module 130 of the first apparatus 100 is configured to apply a first permutation sequence on the sample values of two or more of the first time-domain samples of the first transformed time-domain signal. Moreover, the manipulation module 131 of the second apparatus 160 is configured to apply a second permutation sequence on the sample values of two or more of the second time-domain samples of the second transformed time-domain signal. The first permutation sequence is different from the second permutation sequence.

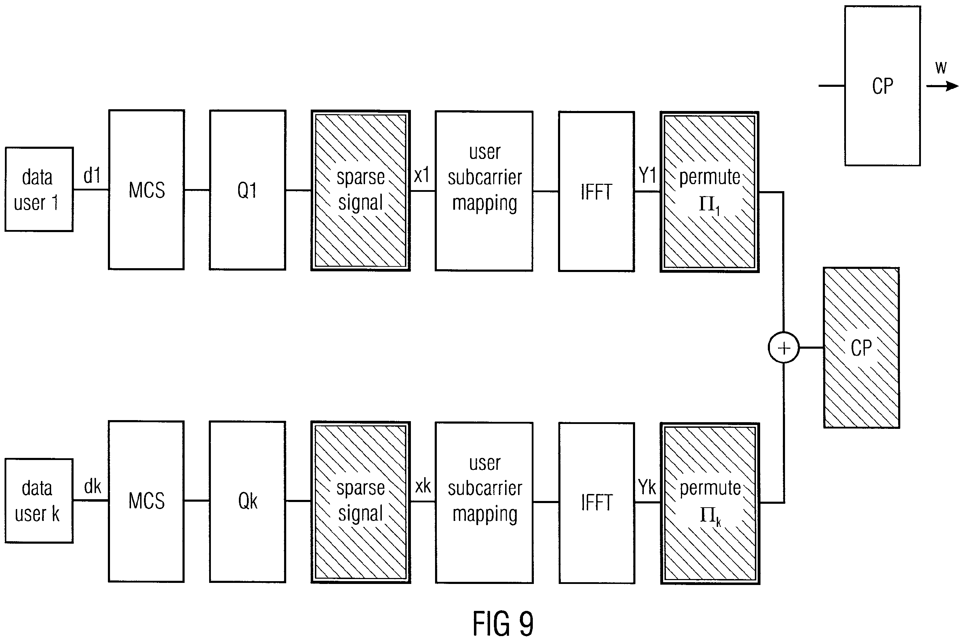

Fig. 9 illustrates a transmitter structure for multi-user access according to an embodiment. In particular, Fig. 9 illustrates multi-user Permuted FFT and provides an embodiment for enabling multi-user access in a time slot using permuted FFTs by providing a functional block diagram.

Thus, in the embodiment depicted by Fig. 9, the received signal becomes

$$r = H_{SP} \left( \Pi_1 F^{-1} x_1 + \Pi_2 F^{-1} x_2 + .. \Pi_k F^{-1} x_k \right)$$

where $H_{SP}$ is the time domain circulant channel matrix, $\Pi_k$ denotes the user specific permutation for user $k$, $F^{-1}$ is IFFT and $x_k$ is the sparse signal of user $k$.

Upon decomposing $H_{SP}$ as before, the effective received signal becomes

$$r = D^{-1} F \left( \Pi_1 F^{-1} x_1 + \Pi_2 F^{-1} x_2 + .. \Pi_k F^{-1} x_k \right).$$

In the following, a receiver for Multi-User Permuted FFT is considered.

At first, a linear Receiver for Multi-User Permuted FFT with Shared Sequences is described.

Based on the equation,

$$r = D^{-1} F \left( \Pi_1 F^{-1} x_1 + \Pi_2 F^{-1} x_2 + .. \Pi_k F^{-1} x_k \right)$$

it can be noticed that channel equalization can again be done after the first FFT at each user receiver.

However, in order to decouple the sparse user signals, the PFFT equalizer takes a modified form because the user permutation sequences are different.

The effective PFFT matrix for users with sequence k now becomes $P_k = F\Pi_k F^{-1}$.

Let $\phi(k)$ denote the subcarrier mapping for users using sequence $k$. The column vectors of $P_k$ are now denoted as $P_k^{\phi(k)}$.

Thus the effective multi-user access PFFT equalizer at each receiver takes the form

$$\Omega_{CSG} = \left[ P_1^{\phi(1)} \ P_2^{\phi(2)} \ .. \ P_k^{\phi(k)} \right]^{-1}.$$

This type of receive inherently assumes that all of the user permutation sequences are shared within the closed subscriber group of users (CSG).

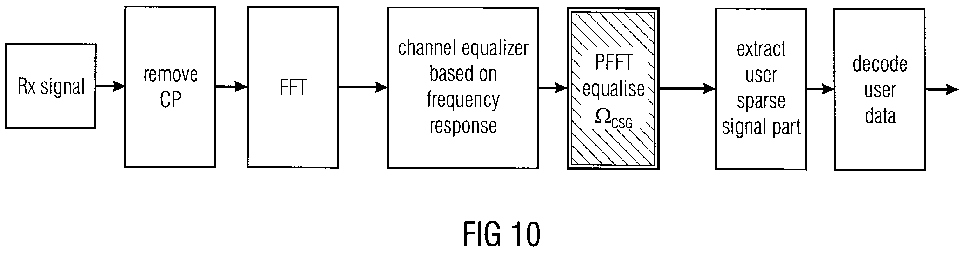

Fig. 10 illustrates a receiver structure for multi-user access according to an embodiment.

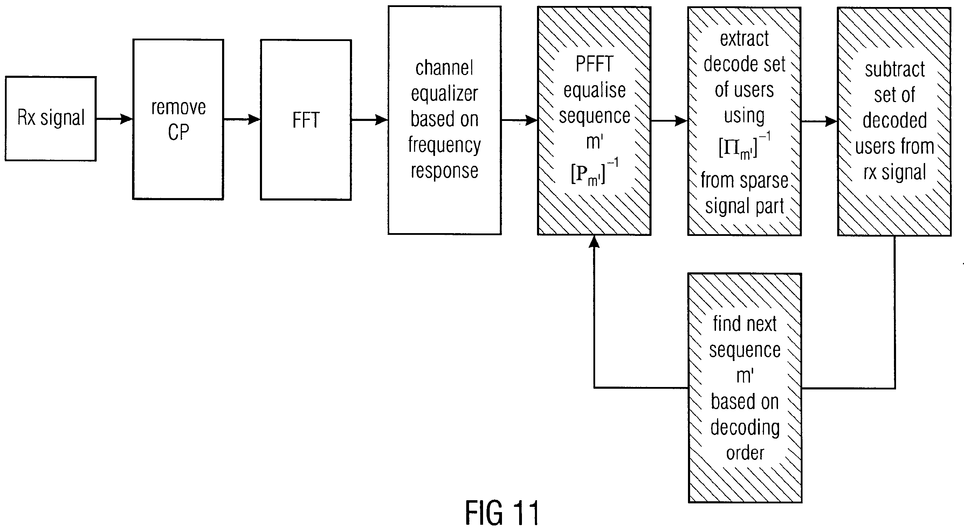

In the following, SIC Receiver for Shared Permutation Sequences is described with reference to Fig. 11. In particular, Fig. 11 illustrates an SIC receiver structure for a shared sequence according to an embodiment.

In typical situations different users may be loaded such that the sparsity ratio

$$\theta = \frac{N_{sec\,ondary}}{B_{primary}}$$

is the same.

Thus if there are $K$ secondary users in the downlink being served, the number of signals per user is lower. This can be exploited by the user receiver for faster decoding, by employing a SIC receiver.

Now, decoding order for SIC Receiver is considered.

It is clear to see that for each permutation sequence $\Pi_m \neq \Pi_{m'}$, maximum interference is generated by the sequence $\Pi_{m'}$ which has corresponding least sparsity in the signal (i.e. most loaded signal space). The sparsity of a sequence is denoted using $n_{sparsity}(\Pi_m)$.

Let the set of permutation sequence indices be T.

Then the decoding order is obtained using

$$m' = \arg\max_{k \in T} n_{sparsity}(\Pi_k)_{\cdot}$$

With the knowledge of information of mapping between each users permutation sequence and signal sparsity, an SIC receiver can be employed.

From the proposed SIC architecture in Fig. 11, it follows that if conventional FFT (OFDM) signals are alongside transmitted by a downlink base station, with a high probability these conventional OFDM (FFT signals with no permutation) will be decoded first. This happens because a downlink base station may in practice desire to load all the available data subcarriers (almost zero sparsity) while transmitting with conventional OFDMA in order to fully utilize the bandwidth.

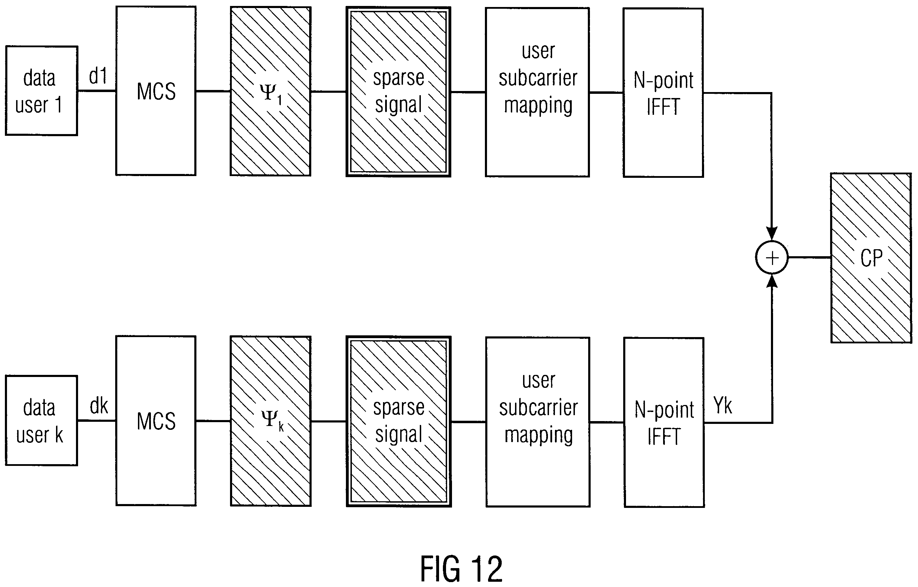

In the following, Precoded-PFFT OFDMA modulation is described with reference to Fig. 12 to 15.

There can be situations where the users do not wish to disclose their permutation sequences even within the closed subscriber group. In this case, some more modification is necessary to the transmitter architecture in order to be able to let the users decode their respective data.

In the proposed innovation, the permutation FFT signal is modulated as a precoded OFDM signal, precoded using corresponding PFFT matrices $\Psi_k$ for each user k as shown below. This modulation is called precoded PFFT-OFDMA.

Fig. 12 illustrates a permutation FFT as a precoded OFDM signal according to an embodiment.

The precoder PFFT matrices take the form

$$\Psi_k = F\Pi_k F^{-1}$$

The OFDMA part of the modulation is performed using the N-point IFFT.

Furthermore, in order to separate the signal space of permuted FFT signals via FFT at the first stage of the receiver, the FFT operation in the precoded FFT is limited to an M-point, where M<N.

The functional block for precoded PFFT-OFDM signal generation, i.e. the functional blocks of operation $\Psi_k$ is as below.

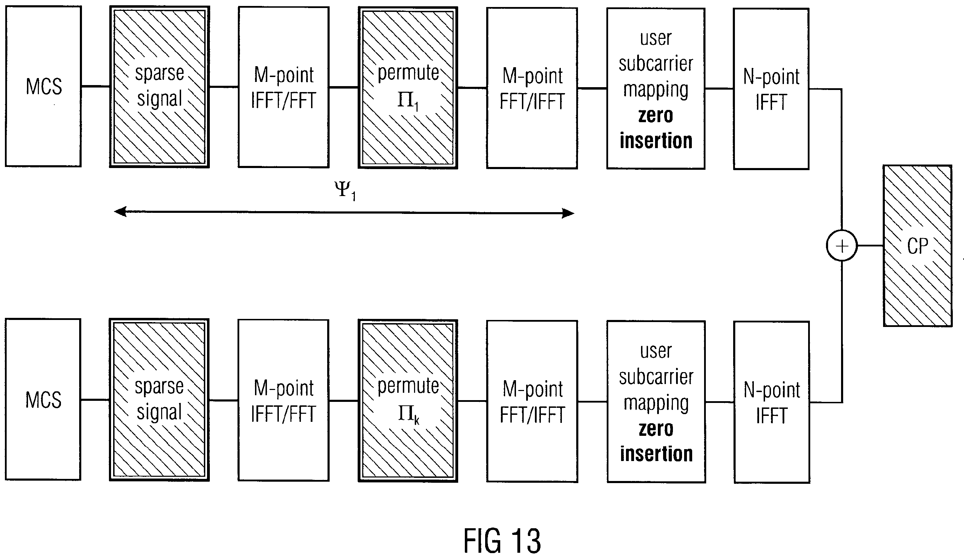

Fig. 13 illustrates transmitter functional blocks of PFFT-OFDMA modulation according to an embodiment.

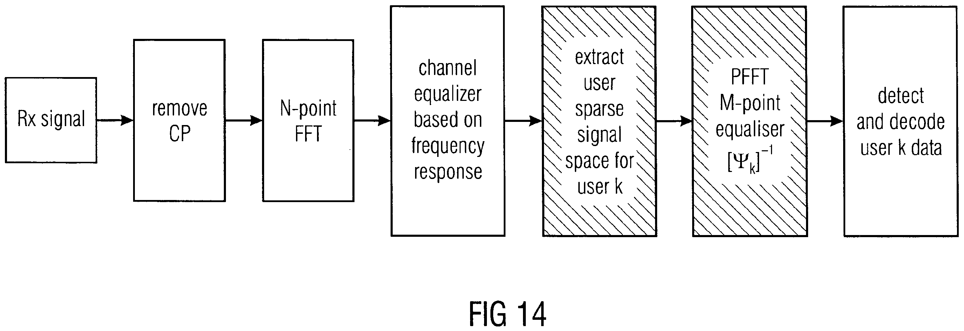

Fig. 14 illustrates a linear receiver architecture for PFFT-OFDMA modulation according to an embodiment.

It can be observed that the OFDMA part of modulation (through M-point to N-point FFT mapping) now allows to orthogonalize the user data signals by restricting the user signal spreading to only predetermined parts of the bandwidth.

This is evident from the received signal after the first N point FFT at the receiver.

The PFFT part of the modulation is equalized after the channel equalization step and is via an M-point equalizer.

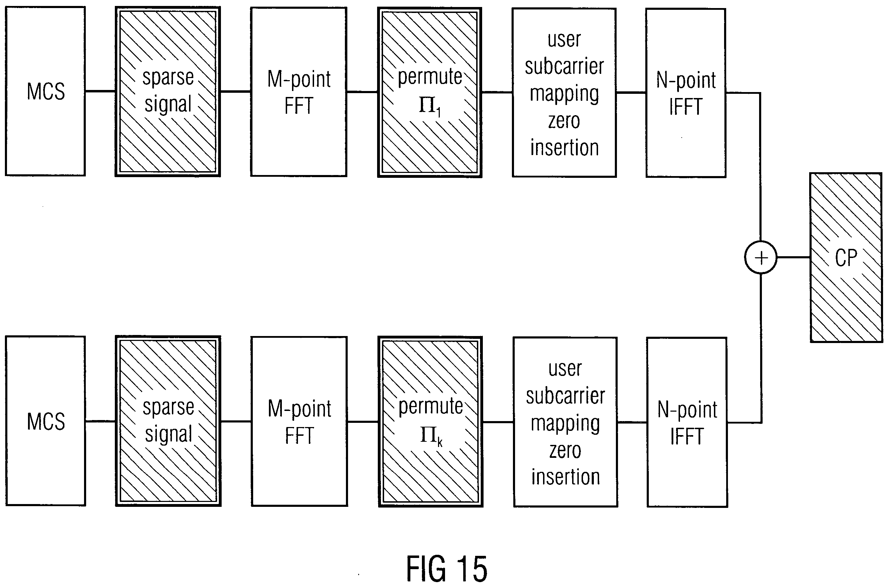

Fig. 15 illustrates functional blocks for permuted DFT precoded modulation according to an embodiment.

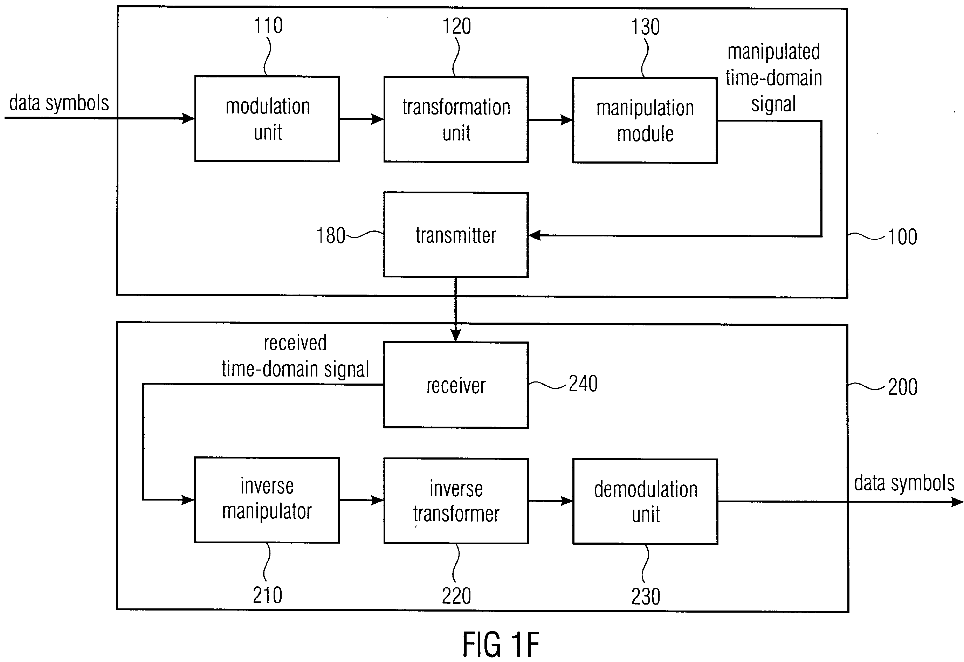

Fig. 1f illustrates a system according to an embodiment.

The system comprises an apparatus 100 for generating a manipulated time-domain signal according to one of the above-described embodiments and an apparatus 200 for demodulating a received time-domain signal according to one of the above-described embodiments.

The apparatus 100 for generating a manipulated time-domain signal is configured to generate a manipulated time-domain signal for transmitting a plurality of data symbols according to the first modification rule, the first modification rule being the first modification rule of the apparatus for demodulating a received time-domain signal.

Moreover, the apparatus 100 for generating a manipulated time-domain signal comprises a transmitter 180 for transmitting the manipulated time-domain signal.

The apparatus 200 for demodulating a received time-domain signal comprises a receiver 240 for receiving the manipulated time-domain signal, being transmitted by the transmitter 180 of the apparatus 100 for generating a manipulated time-domain signal, as a received time-domain signal.

Moreover, the apparatus 200 for demodulating a received time-domain signal is configured to demodulate the received time-domain signal to obtain a plurality of data symbols.

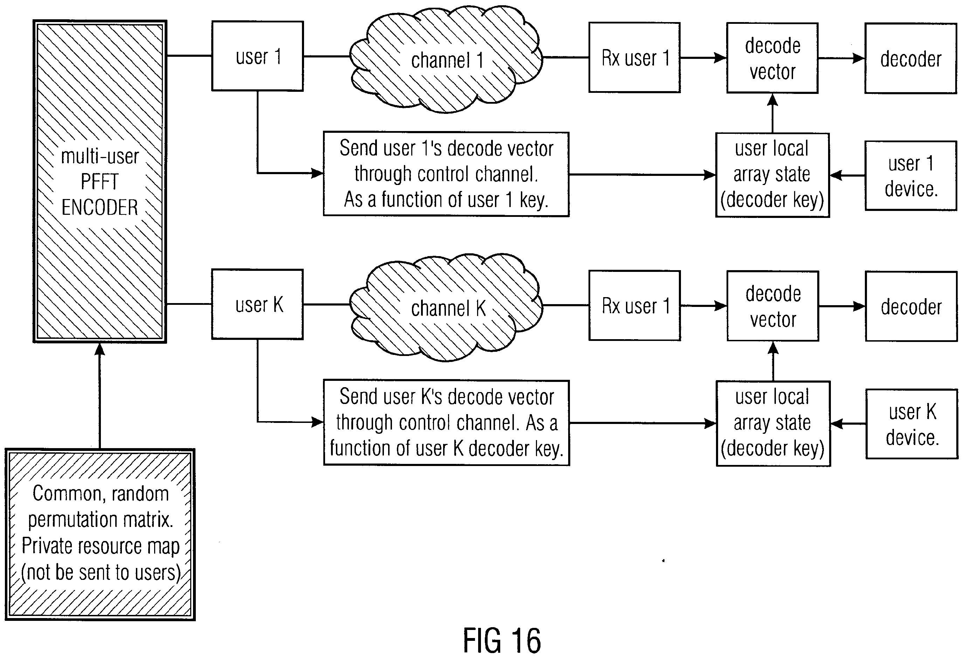

Now, permuted DFT Spread-OFDMA modulation is described with reference to Fig. 16. In particular, Fig. 16 depicts a security enhanced PFFT Architecture and, more particularly, illustrates unicast RRM (Radio Resource Management) Layer 1 Control Signalling according to an embodiment. Inter alia, Fig. 16 depicts the transmitter functional blocks for generating for the case of permuted DFT spread-OFDMA.

The difference in this case is the communication of user-specific decoder sequences to users (even if that set of users use the same permutation sequence and even if their signals overlap spread in the same spectrum). The entire permutation sequence is not communicated to the intended user receivers.

This in principle allows averaging of the channel fading gain over the sub bands assigned to user k, i.e. the effective channel gain is held constant for all the information symbols of user k.

At the same time, the interference is spread and is randomly distributed for the primary receivers.

As already described above, the effective precoder for PFFT-modulation of user k can be given as $\Psi_k = (F\Pi_k F^{-1})^{\phi(k)}$. where $\phi(k)$ indicates the column vector indices corresponding to user k.

It should be noted that if all K users in the downlink is encoded with the same permutation sequence $\Pi$, then

$$\Psi_k = \left(F\Pi F^{-1}\right)^{\phi(k)}$$

Moreover, it should be noted that in this case, the corresponding decoder vector at the receiver of user k can be deduced by exploiting the fact,

$$\Psi_k^{-1} = \left(F\,\Pi^{-1}F^{-1}\right)^{\phi'(k)}$$

where $\phi'(k)$ indicates the row vector indices corresponding to user k.

Thus if the row vector indices (which is the resource mapping information) $\phi'(k)$ are kept secret from all receivers including (user k), the transmitter has to now communicate the decoder vectors (which are null vectors of all others users) to user k. However, an attractive feature is that the decoder vectors $\Psi_k^{-1}$ contain elements only from a set of complex numbers which can be pre-computed at the transmitter.

These known complex elements are in turn the elements belonging to the inverse FFT matrix of arbitrary size M.

Therefore, the transmitter can simply send digital binary information to represent the decoder vectors of user k.

For K users, K such permutation messages are now separately transmitted (instead of one permutation sequence).

This represents a K-fold increase in downlink control signaling, in order to increase the wireless information security of all users.

Note that because the downlink resource map $\phi'(k)$ is kept secret from all users, none of the K users can infer the permutation matrix directly from the decoder vectors $\Psi_k^{-1}$.

However, it may still be the case that the downlink decoder vectors are compromised to attackers because they are transmitted in plaintext, or only weakly encrypted.

Thus, for further enhancement, the binary control information which indicates the decoder vectors, can be encoded as a function of pre-stored array states at the user device (using SIM cards), which is called the decoder key.

The pre-stored array states can be shared with an authorized secondary base station transmitter.

Thus none of the other K-1 users would have prior knowledge about the decoder key of a user k.

This means even if the logical control information of a user k's decoder vector is obtained by any other user (or attacker); the actual decoder vector is still private without the decoder key (which is assumed to be never transmitted on radio interface).

It may also be the case that such pre-allocation of keys may not always be feasible in a network. In such cases, the decoder keys can be transmitted on radio air interface via a strong encryption algorithm such as the advanced encryption standard (AES).

This transmission can provide valid keys, for example, in the span of hours whereas transmission time of data packets is carried out in the order of milliseconds.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The inventive decomposed signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. An apparatus for generating a manipulated time-domain signal for transmitting a plurality of data symbols, comprising:

    a modulation unit (110; 111; 305) for modulating the data symbols on one or more first subcarriers, wherein the modulation unit (110; 111; 305) is configured to not load the data symbols on one or more second subcarriers, wherein each of the one or more second subcarriers is different from each of the one or more first subcarriers, a transformation unit (120; 121; 360) for transforming the one or more first subcarriers and the one or more second subcarriers to a time-domain to obtain a transformed time-domain signal, and a manipulation module (130; 131; 365; 565) for invertibly modifying the transformed time-domain signal according to a first modification rule to obtain the manipulated time-domain signal, wherein the manipulation module (130; 131; 365; 565) is configured to invertibly modify the transformed time-domain signal according to the first modification rule by applying a permutation matrix, and wherein a number of said one or more first subcarriers is selected such that the signal at an input of the transformation unit (120; 121; 360) is made sparse.

2. An apparatus according to claim 1, wherein the transformed time-domain signal comprises a plurality of samples, wherein each of the time-domain samples comprises a sample value, wherein the manipulation module (130; 131; 365; 565) is a permutation module being configured to invertibly modify the transformed time-domain signal according to the first modification rule by applying the permutation matrix on the sample values of two or more of the time-domain samples of the transformed time-domain signal, so that the sample value of each of the two or more time-domain samples is assigned to a different time-domain sample of the two or more time-domain samples to obtain a sample value for two or more of the time-domain samples of an intermediate time-domain signal, wherein the manipulation module (130; 131; 365; 565) is configured to obtain the manipulated time-domain signal depending on the intermediate time-domain signal.

3. An apparatus according to claim 1, wherein the transformed time-domain signal comprises a plurality of samples, wherein each of the time-domain samples comprises a sample value, wherein the manipulation module (130; 131; 365; 565) is a permutation module being configured to invertibly modify the transformed time-domain signal according to the first modification rule by applying the permutation matrix on the sample values of two or more of the time-domain samples of the transformed time-domain signal, so that the sample value of each of the two or more time-domain samples is assigned to a different time-domain sample of the two or more time-domain samples to obtain a sample value for two or more of the time-domain samples of an intermediate time-domain signal.

4. An apparatus according to claim 2 or 3,
wherein the manipulation module (365; 565) is configured to invertibly modify the transformed time-domain signal according to the first modification rule to obtain the intermediate time-domain signal, and
wherein the manipulation module (365; 565) is furthermore configured to add a cyclic prefix to the intermediate time-domain signal to obtain the manipulated time-domain signal.

5. An apparatus according to claim 1,
wherein the manipulation module (365; 565) is configured to invertibly modify the transformed time-domain signal according to the first modification rule to obtain an intermediate time-domain signal, and
wherein the manipulation module (365; 565) is furthermore configured to add a cyclic prefix to the intermediate time-domain signal to obtain the manipulated time-domain signal.

6. An apparatus according to one of the preceding claims, wherein the manipulation module (130; 131; 365; 565) is configured to invertibly modify the transformed time-domain signal according to the first modification rule, so that a first spectrum of the transformed time-domain signal is different from a second spectrum of the manipulated time-domain signal.

7. An apparatus according to one of the preceding claims,
wherein the apparatus further comprises a pilot modulator (140) for modulating a pilot sequence on one or more third subcarriers,
wherein the apparatus further comprises a pilot transformer (150) for transforming the one or more third subcarriers to the time-domain to obtain a pilot time portion of the transformed time-domain signal, and
wherein the manipulation module (130; 565) is configured to not invertibly modify the pilot time portion of the transformed time-domain signal according to the first modification rule.

8. An apparatus for generating a multi-user signal, comprising:

a first apparatus (100) according to one of the preceding claims for generating a first manipulated time-domain signal as a first manipulated single-user signal, wherein the transformation unit (120) of the first apparatus is configured to obtain the transformed time-domain signal of the first apparatus as a first transformed time-domain signal, wherein the first transformed time-domain signal comprises a plurality of first time-domain samples, wherein each of the first time-domain samples comprises a sample value,
a second apparatus (160) according to one of the preceding claims for generating a second manipulated time-domain signal as a second manipulated single-user signal, wherein the transformation unit (121) of the second apparatus is configured to obtain the transformed time-domain signal of the second apparatus as a second transformed time-domain signal, wherein the second transformed time-domain signal comprises a plurality of second time-domain samples, wherein each of the second time-domain samples comprises a sample value, and
a combination unit (170) for combining the first manipulated single-user signal and the second manipulated user signal to obtain the multi-user signal,
wherein the manipulation module (130) of the first apparatus is configured to apply a first permutation sequence on the sample values of two or more of the first time-domain samples of the first transformed time-domain signal,
wherein the manipulation module (131) of the second apparatus is configured to apply a second permutation sequence on the sample values of two or more of the second time-domain samples of the second transformed time-domain signal, and
wherein the first permutation sequence is different from the second permutation sequence.

9. An apparatus according to claim 8,
wherein the transformation unit (120) of the first apparatus is configured to transform the one or more first subcarriers and the one or more second subcarriers to the time-domain by employing an M-point Inverse Fast Fourier Transform,
wherein the manipulation module (130) of the first apparatus is configured to apply the permutation sequence dependent on the value M of the M-point Inverse Fast Fourier Transform,
wherein the transformation unit (121) of the second apparatus is configured to transform the one or more first subcarriers and the one or more second subcarriers to the time-domain by employing the M-point Inverse Fast Fourier Transform,
wherein the manipulation module (131) of the second apparatus is configured to apply the permutation sequence dependent on the value M of the Inverse M-point Fast Fourier Transform.

10. An apparatus according to claim 8 or 9, wherein the apparatus is configured to employ a Permuted Fast Fourier Transform signaling, wherein the apparatus is configured to communicate user-specific decoder sequences to a plurality of users.

11. A system, comprising:

an apparatus (100) according to one of claims 1 to 10 for generating a manipulated time-domain signal, and an apparatus (200) for demodulating a received time-domain signal,
wherein the apparatus (100) for generating the manipulated time-domain signal comprises a transmitter (180) for transmitting the manipulated time-domain signal, wherein the apparatus (200) for demodulating the received time-domain signal comprises a receiver (240) for receiving the manipulated time-domain signal, being transmitted by the transmitter (180) of the apparatus (100) for generating the manipulated time-domain signal, as the received time-domain signal,
wherein the apparatus (200) for demodulating the received time-domain signal is configured to demodulate the received time-domain signal to obtain a plurality of data symbols, wherein the transformed time-domain signal has been generated by modulating the data symbols on one or more first subcarriers, and by not modulating the data symbols on one or more second subcarriers, by transforming the one or more first subcarriers and the one or more second subcarriers to a time-domain to obtain a transformed time-domain signal, and by invertibly modifying the transformed time-domain signal according to the first modification rule to generate the received time-domain signal,
wherein the apparatus for demodulating the received time-domain signal further comprises an inverse manipulator (210; 415; 710), an inverse transformer (220; 450; 720), and a demodulation unit (230; 460; 730) for demodulating the one or more first subcarriers to obtain the plurality of data symbols,
wherein the inverse manipulator (210; 415; 710) is configured to modify the received time-domain signal according to a second modification rule, being an inverse rule of the first modification rule, to obtain the manipulated time-domain signal, and the inverse transformer (220; 450; 720) is configured to transform the manipulated time-domain signal from a time-domain to a spectral domain to obtain the one or more first subcarriers, or
wherein the inverse transformer (220; 450; 720) is configured to transform the received time-domain signal from a time-domain to a spectral domain to obtain an intermediate spectral-domain signal, and the inverse manipulator (210; 415; 710) is configured to modify the intermediate spectral-domain signal according to a second modification rule, being an inverse rule of the first modification rule, to obtain the one or more first subcarriers.

12. A system according to claim 11, wherein the apparatus (200) for demodulating the received time-domain signal is configured to remove a cyclic prefix from the received time-domain signal to obtain an intermediate time-domain signal.

13. A method for generating a manipulated time-domain signal for transmitting a plurality of data symbols, comprising:

modulating the data symbols on one or more first subcarriers, and not loading the data symbols on one or more second subcarriers, wherein each of the one or more second subcarriers is different from each of the one or more first subcarriers,
transforming by a transformation unit the one or more first subcarriers and the one or more second subcarriers to a time-domain to obtain a transformed time-domain signal,
invertibly modifying the transformed time-domain signal according to a first modification rule to obtain the manipulated time-domain signal,
wherein invertibly modifying the transformed time-domain signal according to the first modification rule is conducted by applying a permutation matrix, and
wherein a number of said one or more first subcarriers is selected such that the signal at an input of the transformation unit is made sparse.

14. A method according to claim 13, wherein the transformed time-domain signal comprises a plurality of samples, wherein each of the time-domain samples comprises a sample value, wherein invertibly modifying is conducted by invertibly modifying the transformed time-domain signal according to the first modification rule by applying the permutation matrix on the sample values of two or more of the time-domain samples of the transformed time-domain signal, so that the sample value of each of the two or more time-domain samples is assigned to a different time-domain sample of the two or more time-domain samples to obtain a sample value for two or more of the time-domain samples of an intermediate time-domain signal.

15. A computer program comprising instructions which, when the program is executed by a computer, cause the computer to carry out the method of claim 13 or 14.


**Patentansprüche**

1. Eine Vorrichtung zum Erzeugen eines manipulierten Zeitbereichssignals zum Senden einer Mehrzahl von Datensymbolen, wobei die Vorrichtung folgende Merkmale aufweist:

eine Modulationseinheit (110; 111; 305) zum Modulieren der Datensymbole auf einem oder mehreren ersten Teilträgern, wobei die Modulationseinheit (110; 111; 305) dazu ausgebildet ist, die Datensymbole nicht auf einem oder mehreren zweiten Teilträgern zu laden, wobei sich jeder des einen oder der mehreren zweiten Teilträger von jedem des einen oder der mehreren ersten Teilträger unterscheidet,
eine Transformationseinheit (120; 121; 360) zum Transformieren des einen oder der mehreren ersten Teilträger und des einen oder der mehreren zweiten Teilträger in einen Zeitbereich, um ein transformiertes Zeitbereichssignal zu erhalten, und
ein Manipulationsmodul (130; 131; 365; 565) zum umkehrbaren Modifizieren des transformierten Zeitbereichssignals gemäß einer ersten Modifizierungsregel, um das manipulierte Zeitbereichssignal zu erhalten, und wobei das Manipulationsmodul (130; 131; 365; 565) dazu ausgebildet ist, das transformierte Zeitbereichssignal gemäß der ersten Modifizierungsregel durch Anwenden einer Permutationsmatrix umkehrbar zu modifizieren, und
wobei eine Anzahl des einen oder der mehreren ersten Teilträger derart ausgewählt wird, dass das Signal an einem Eingang der Transformationseinheit (120; 121; 360) spärlich wird.

2. Eine Vorrichtung gemäß Anspruch 1, bei der das transformierte Zeitbereichssignal eine Mehrzahl von Abtastungen aufweist, wobei jede der Zeitbereichsabtastungen einen Abtastwert aufweist, wobei das Manipulationsmodul (130; 131; 365; 565) ein Permutationsmodul ist, das dazu ausgebildet ist, das transformierte Zeitbereichssignal gemäß der ersten Modifizierungsregel durch Anwenden der Permutationsmatrix auf die Abtastwerte von zwei oder mehr der Zeitbereichsabtastungen des transformierten Zeitbereichssignals umkehrbar zu modifizieren, so dass der Abtastwert jeder der zwei oder mehr Zeitbereichsabtastungen einer unterschiedlichen Zeitbereichsabtastung der zwei oder mehr Zeitbereichsabtastungen zugewiesen wird, um einen Abtastwert für zwei oder mehr der Zeitbereichsabtastungen eines Zwischenzeitbereichssignals zu erhalten, wobei das Manipulationsmodul (130; 131; 365; 565) dazu ausgebildet ist, das manipulierte Zeitbereichssignal in Abhängigkeit von dem Zwischenzeitbereichssignal zu erhalten.

3. Eine Vorrichtung gemäß Anspruch 1, bei der das transformierte Zeitbereichssignal eine Mehrzahl von Abtastungen aufweist, wobei jede der Zeitbereichsabtastungen einen Abtastwert aufweist, wobei das Manipulationsmodul (130; 131; 365; 565) ein Permutationsmodul ist, das dazu ausgebildet ist, das transformierte Zeitbereichssignal gemäß der ersten Modifizierungsregel durch Anwenden der Permutationsmatrix auf die Abtastwerte von zwei oder mehr der Zeitbereichsabtastungen des transformierten Zeitbereichssignals umkehrbar zu modifizieren, so dass der Abtastwert jeder der zwei oder mehr Zeitbereichsabtastungen einer unterschiedlichen Zeitbereichsabtastung der zwei oder mehr Zeitbereichsabtastungen zugewiesen wird, um einen Abtastwert für zwei oder mehr der Zeitbereichsabtastungen eines Zwischenzeitbereichssignals zu erhalten.

4. Eine Vorrichtung gemäß Anspruch 2 oder 3,
wobei das Manipulationsmodul (365; 565) dazu ausgebildet ist, das transformierte Zeitbereichssignal gemäß der ersten Modifizierungsregel umkehrbar zu modifizieren, um das Zwischenzeitbereichssignal zu erhalten, und wobei das Manipulationsmodul (365; 565) ferner dazu ausgebildet ist, ein zyklisches Präfix zu den Zwischenzeitbereichssignalen hinzuzufügen, um das manipulierte Zeitbereichssignal zu erhalten.

5. Eine Vorrichtung gemäß Anspruch 1,
wobeidas Manipulationsmodul (365; 565) dazu ausgebildet ist, das transformierte Zeitbereichssignal gemäß der ersten Modifizierungsregel umkehrbar zu modifizieren, um ein Zwischenzeitbereichssignal zu erhalten, und wobei das Manipulationsmodul (365; 565) ferner dazu ausgebildet ist, ein zyklisches Präfix zu dem Zwischenzeitbereichssignal hinzuzufügen, um das manipulierte Zeitbereichssignal zu erhalten.

6. Eine Vorrichtung gemäß einem der vorhergehenden Ansprüche, bei der das Manipulationsmodul (130; 131; 365; 565) dazu ausgebildet ist, das transformierte Zeitbereichssignal gemäß der ersten Modifizierungsregel umkehrbar zu modifizieren, so dass sich ein erstes Spektrum des transformierten Zeitbereichssignals von einem zweiten Spektrum des manipulierten Zeitbereichssignals unterscheidet.

7. Eine Vorrichtung gemäß einem der vorhergehenden Ansprüche,
wobei die Vorrichtung ferner einen Pilotmodulator (140) zum Modulieren einer Pilotsequenz auf einem oder mehreren dritten Teilträgern aufweist,
wobei die Vorrichtung ferner einen Pilottransformator (150) zum Transformieren des einen oder der mehreren dritten Teilträger in den Zeitbereich aufweist, um einen Pilotzeitabschnitt des transformierten Zeitbereichssignals zu erhalten, und
wobei das Manipulationsmodul (130; 565) dazu ausgebildet ist, den Pilotzeitabschnitt des transformierten Zeitbereichssignals nicht gemäß der ersten Modifizierungsregel umkehrbar zu modifizieren.

8. Eine Vorrichtung zum Erzeugen eines Mehrbenutzersignals, die folgende Merkmale aufweist:

eine erste Vorrichtung (100) gemäß einem der vorhergehenden Ansprüche zum Erzeugen eines ersten manipulierten Zeitbereichssignals als ein erstes manipuliertes Einzelbenutzersignal, wobei die Transformationseinheit (120) der ersten Vorrichtung dazu ausgebildet ist, das transformierte Zeitbereichssignal der ersten Vorrichtung als ein erstes transformiertes Zeitbereichssignal zu erhalten, wobei das erste transformierte Zeitbereichssignal eine Mehrzahl von ersten Zeitbereichsabtastungen aufweist, wobei jede der ersten Zeitbereichsabtastungen einen Abtastwert aufweist,
eine zweite Vorrichtung (160) gemäß einem der vorhergehenden Ansprüche zum Erzeugen eines zweiten manipulierten Zeitbereichssignals als ein zweites manipuliertes Einzelbenutzersignal, wobei die Transformationseinheit (121) der zweiten Vorrichtung dazu ausgebildet ist, das transformierte Zeitbereichssignal der zweiten Vorrichtung als ein zweites transformiertes Zeitbereichssignal zu erhalten, wobei das zweite transformierte Zeitbereichssignal eine Mehrzahl von zweiten Zeitbereichsabtastungen aufweist, wobei jede der zweiten Zeitbereichsabtastungen einen Abtastwert aufweist, und
eine Kombinationseinheit (170) zum Kombinieren des ersten manipulierten Einzelbenutzersignals und des zweiten manipulierten Benutzersignals, um das Mehrfachbenutzersignal zu erhalten,
wobei das Manipulationsmodul (130) der ersten Vorrichtung dazu ausgebildet ist, eine erste Permutationssequenz auf die Abtastwerte von zwei oder mehr der ersten Zeitbereichsabtastungen des ersten transformierten Zeitbereichssignals anzuwenden,
wobei das Manipulationsmodul (131) der zweiten Vorrichtung dazu ausgebildet ist, eine zweite Permutationssequenz auf die Abtastwerte von zwei oder mehr der zweiten Zeitbereichsabtastungen des zweiten transformierten Zeitbereichssignals anzuwenden, und
wobei sich die erste Permutationssequenz von der zweiten Permutationssequenz unterscheidet.

9. Eine Vorrichtung gemäß Anspruch 8,
bei der die Transformationseinheit (120) der ersten Vorrichtung dazu ausgebildet ist, den einen oder die mehreren ersten Teilträger und den einen oder die mehreren zweiten Teilträger in den Zeitbereich durch Einsetzen einer M-Punkt-Inverse-Schnelle-Fourier-Transformation zu transformieren,
wobei das Manipulationsmodul (130) der ersten Vorrichtung dazu ausgebildet ist, die Permutationssequenz in Abhängigkeit von dem Wert M der M-Punkt-Inverse-Schnelle-Fourier-Transformation anzuwenden,
wobei die Transformationseinheit (121) der zweiten Vorrichtung dazu ausgebildet ist, den einen oder die mehreren ersten Teilträger und den einen oder die mehreren zweiten Teilträger in den Zeitbereich durch Anwenden der M-Punkt-Inverse-Schnelle-Fourier-Transformation zu transformieren,
wobei das Manipulationsmodul (131) der zweiten Vorrichtung dazu ausgebildet ist, die Permutationssequenz in Abhängigkeit von dem Wert M der M-Punkt-Inverse-Schnelle-Fourier-Transformation anzuwenden.

10. Eine Vorrichtung gemäß Anspruch 8 oder 9, wobei die Vorrichtung dazu ausgebildet ist, eine Permutierte-Schnelle-Fourier-Transformation-Signalisierung anzuwenden, wobei die Vorrichtung dazu ausgebildet ist, benutzerspezifische Decodierersequenzen an eine Mehrzahl von Benutzern zu kommunizieren.

11. Ein System, das folgende Merkmale aufweist:

eine Vorrichtung (100) gemäß einem der Ansprüche 1 bis 10 zum Erzeugen eines manipulierten Zeitbereichssignals, und

eine Vorrichtung (200) zum Demodulieren eines empfangenen Zeitbereichssignals,

wobei die Vorrichtung (100) zum Erzeugen des manipulierten Zeitbereichssignals einen Sender (180) zum Senden des manipulierten Zeitbereichssignals aufweist,

wobei die Vorrichtung (200) zum Demodulieren des empfangene Zeitbereichssignals einen Empfänger (240) zum Empfangen des manipulierten Zeitbereichssignals, das von dem Sender (180) der Vorrichtung (100) zum Erzeugen des manipulierten Zeitbereichssignals gesendet wird, als das empfangene Zeitbereichssignal aufweist,

wobei die Vorrichtung (200) zum Demodulieren des empfangenen Zeitbereichssignals dazu ausgebildet ist, das empfangene Zeitbereichssignal zu demodulieren, um eine Mehrzahl von Datensymbolen zu erhalten, wobei das transformierte Zeitbereichssignal durch Modulieren der Datensymbole auf einem oder mehreren ersten Teilträgern, und durch Nicht-Modulieren der Datensymbole auf einem oder mehreren zweiten Teilträgern, durch Transformieren des einen oder der mehreren ersten Teilträger und des einen oder der mehreren zweiten Teilträger in einen Zeitbereich, um ein transformiertes Zeitbereichssignal zu erhalten, und durch umkehrbares Modifizieren des transformierten Zeitbereichssignals gemäß der ersten Modifizierungsregel, um das empfangene Zeitbereichssignal zu erzeugen, erzeugt worden ist,

wobei die Vorrichtung zum Demodulieren des empfangenen Zeitbereichssignals ferner einen Inversmanipulator (210; 415; 710), einen Inverstransformator (220; 450; 720) und eine Demodulationseinheit (230; 460; 730) zum Demodulieren des einen oder der mehreren ersten Teilträger, um die Mehrzahl von Datensymbolen zu erhalten, aufweist,

wobei der Inversmanipulator (210; 415; 710) dazu ausgebildet ist, das empfangene Zeitbereichssignal gemäß einer zweiten Modifizierungsregel, welche eine inverse Regel der ersten Modifizierungsregel ist, zu modifizieren, um das manipulierte Zeitbereichssignal zu erhalten, und der Inverstransformator (220; 450; 720) dazu ausgebildet ist, das manipulierte Zeitbereichssignal aus einem Zeitbereich in einen Spektralbereich zu transformieren, um den einen oder die mehreren ersten Teilträger zu erhalten, oder

wobei der Inverstransformator (220; 450; 720) dazu ausgebildet ist, das empfangene Zeitbereichssignal aus einem Zeitbereich in einen Spektralbereich zu transformieren, um ein Zwischenspektralbereichssignal zu erhalten, und der Inversmanipulator (210; 415; 710) dazu ausgebildet ist, das Zwischenspektralbereichssignal gemäß einer zweiten Modifizierungsregel, welche eine inverse Regel der ersten Modifizierungsregel ist, zu modifizieren, um den einen oder die mehreren ersten Teilträger zu erhalten.

**12.** Ein System gemäß Anspruch 11, bei dem die Vorrichtung (200) zum Demodulieren des empfangenen Zeitbereichssignals dazu ausgebildet ist, ein zyklisches Präfix von dem empfangenen Zeitbereichssignal zu entfernen, um ein Zwischenzeitbereichssignal zu erhalten.

**13.** Ein Verfahren zum Erzeugen eines manipulierten Zeitbereichssignals zum Senden einer Mehrzahl von Datensymbolen, das folgende Schritte aufweist:

Modulieren der Datensymbole auf einem oder mehreren ersten Teilträgern und Nicht-Laden der Datensymbole auf einem oder mehreren zweiten Teilträgern, wobei sich jeder des einen oder der mehreren zweiten Teilträger von jedem des einen oder der mehreren ersten Teilträger unterscheidet,

Transformieren des einen oder der mehreren ersten Teilträger und des einen oder der mehreren zweiten Teilträger in einen Zeitbereich, um ein transformiertes Zeitbereichssignal zu erhalten, durch eine Transformationseinheit,

umkehrbares Modifizieren des transformierten Zeitbereichssignals gemäß einer ersten Modifizierungsregel, um das manipulierte Zeitbereichssignal zu erhalten,

wobei das umkehrbare Modifizieren des transformierten Zeitbereichssignals gemäß der ersten Modifizierungsregel durch Anwenden einer Permutationsmatrix ausgeführt wird, und

wobei eine Anzahl des einen oder der mehreren ersten Teilträger derart ausgewählt wird, dass das Signal an einem Eingang der Transformationseinheit spärlich wird.

**14.** Ein Verfahren gemäß Anspruch 13, bei dem das transformierte Zeitbereichssignal eine Mehrzahl von Abtastungen aufweist, wobei jede der Zeitbereichsabtastungen einen Abtastwert aufweist, wobei das umkehrbare Modifizieren durch umkehrbares Modifizieren des transformierten Zeitbereichssignals gemäß der ersten Modifizierungsregel durch Anwenden der Permutationsmatrix auf die Abtastwerte von zwei oder mehr der Zeitbereichsabtastungen des transformierten Zeitbereichssignals ausgeführt wird, so dass der Abtastwert von jeder der zwei oder mehr Zeitbereichsabtastungen einer unterschiedlichen Zeitbereichsabtastung der zwei oder mehr Zeitbereichsabtastungen zugewiesen wird, um einen Abtastwert für zwei oder mehr der Zeitbereichsabtastungen eines Zwischenzeitbereichssignals zu erhalten.

15. Ein Computerprogramm, das Anweisungen aufweist, die dann, wenn das Programm durch einen Computer ausgeführt wird, bewirken, dass der Computer das Verfahren gemäß Anspruch 13 oder 14 ausführt.


**Revendications**

1. Appareil pour générer un signal dans le domaine temporel manipulé pour transmettre une pluralité de symboles de données, comprenant:

   une unité de modulation (110; 111; 305) destinée à moduler les symboles de données sur une ou plusieurs premières sous-porteuses, où l'unité de modulation (110; 111; 305) est configurée pour ne pas charger les symboles de données sur une ou plusieurs deuxièmes sous-porteuses, où chacune des une ou plusieurs deuxièmes sous-porteuses est différente de chacune des une ou plusieurs premières sous-porteuses,
   une unité de transformation (120; 121; 360) destinée à transformer une ou plusieurs premières sous-porteuses et les une ou plusieurs deuxièmes sous-porteuses à un domaine temporel pour obtenir un signal dans le domaine temporel transformé, et
   un module de manipulation (130; 131; 365; 565) destiné à modifier de manière réversible le signal dans le domaine temporel transformé selon une première règle de modification pour obtenir le signal dans le domaine temporel manipulé,
   dans lequel le module de manipulation (130; 131; 365; 565) est configuré pour modifier de manière réversible le signal dans le domaine temporel transformé selon la première règle de modification en appliquant une matrice de permutation, et
   dans lequel un nombre desdites une ou plusieurs premières sous-porteuses est sélectionné de sorte que le signal à une entrée de l'unité de transformation (120; 121; 360) soit rendu clairsemé.

2. Appareil selon la revendication 1, dans lequel le signal dans le domaine temporel transformé comprend une pluralité d'échantillons, où chacun des échantillons dans le domaine temporel comprend une valeur d'échantillon, dans lequel le module de manipulation (130; 131; 365; 565) est un module de permutation qui est configuré pour modifier de manière réversible le signal dans le domaine temporel transformé selon la première règle de modification en appliquant la matrice de permutation aux valeurs d'échantillon de deux ou plusieurs des échantillons dans le domaine temporel du signal dans le domaine temporel transformé, de sorte que la valeur d'échantillon de chacun des deux ou plusieurs échantillons dans le domaine temporel soit attribuée à un échantillon dans le domaine temporel différent des deux ou plusieurs échantillons dans le domaine temporel pour obtenir une valeur d'échantillon pour deux ou plusieurs des échantillons dans le domaine temporel d'un signal dans le domaine temporel intermédiaire, dans lequel le module de manipulation (130; 131; 365; 565) est configuré pour obtenir le signal dans le domaine temporel manipulé en fonction du signal dans le domaine temporel intermédiaire.

3. Appareil selon la revendication 1, dans lequel le signal dans le domaine temporel transformé comprend une pluralité d'échantillons, où chacun des échantillons dans le domaine temporel comprend une valeur d'échantillon, dans lequel le module de manipulation (130; 131; 365; 565) est un module de permutation qui est configuré pour modifier de manière réversible le signal dans le domaine temporel transformé selon la première règle de modification en appliquant la matrice de permutation aux valeurs d'échantillon de deux ou plusieurs des échantillons dans le domaine temporel du signal dans le domaine temporel transformé, de sorte que la valeur d'échantillon de chacun des deux ou plusieurs échantillons dans le domaine temporel soit attribuée à un échantillon dans le domaine temporel différent des deux ou plusieurs échantillons dans le domaine temporel pour obtenir une valeur d'échantillon pour deux ou plusieurs des échantillons dans le domaine temporel d'un signal dans le domaine temporel intermédiaire.

4. Appareil selon la revendication 2 ou 3,
   dans lequel le module de manipulation (365; 565) est configuré pour modifier de manière réversible le signal dans le domaine temporel transformé selon la première règle de modification pour obtenir le signal dans le domaine temporel intermédiaire, et
   dans lequel le module de manipulation (365; 565) est configuré par ailleurs pour ajouter un préfixe cyclique au signal dans le domaine temporel intermédiaire pour obtenir le signal dans le domaine temporel manipulé.

5. Appareil selon la revendication 1,

dans lequel le module de manipulation (365; 565) est configuré pour modifier de manière réversible le signal dans le domaine temporel transformé selon la première règle de modification pour obtenir un signal dans le domaine temporel intermédiaire, et

dans lequel le module de manipulation (365; 565) est configuré par ailleurs pour ajouter un préfixe cyclique au signal dans le domaine temporel intermédiaire pour obtenir le signal dans le domaine temporel manipulé.

6. Appareil selon l'une des revendications précédentes, dans lequel le module de manipulation (130; 131; 365; 565) est configuré pour modifier de manière réversible le signal dans le domaine temporel transformé selon la première règle de modification, de sorte qu'un premier spectre du signal dans le domaine temporel transformé soit différent d'un deuxième spectre du signal dans le domaine temporel manipulé.

7. Appareil selon l'une des revendications précédentes,
dans lequel l'appareil comprend par ailleurs un modulateur pilote (140) destiné à moduler une séquence pilote sur une ou plusieurs troisièmes sous-porteuses,
dans lequel l'appareil comprend par ailleurs un transformateur pilote (150) destiné à transformer les une ou plusieurs troisièmes sous-porteuses au domaine temporel pour obtenir une partie temporelle pilote du signal dans le domaine temporel transformé, et
dans lequel le module de manipulation (130; 565) est configuré pour modifier de manière non réversible la partie temporelle pilote du signal dans le domaine temporel transformé selon la première règle de modification.

8. Appareil pour générer un signal multi-utilisateur, comprenant:

un premier appareil (100) selon l'une des revendications précédentes pour générer un premier signal dans le domaine temporel manipulé comme premier signal d'utilisateur unique manipulé, où l'unité de transformation (120) du premier appareil est configurée pour obtenir le signal dans le domaine temporel transformé du premier appareil comme premier signal dans le domaine temporel transformé, où le premier signal dans le domaine temporel transformé comprend une pluralité de premiers échantillons dans le domaine temporel, où chacun des premiers échantillons dans le domaine temporel comprend une valeur d'échantillon,
un deuxième appareil (160) selon l'une des revendications précédentes pour générer un deuxième signal dans le domaine temporel manipulé comme deuxième signal d'utilisateur unique manipulé, où l'unité de transformation (121) du deuxième appareil est configurée pour obtenir le signal dans le domaine temporel transformé du deuxième appareil comme deuxième signal dans le domaine temporel transformé, où le deuxième signal dans le domaine temporel transformé comprend une pluralité de deuxièmes échantillons dans le domaine temporel, où chacun des deuxièmes échantillons dans le domaine temporel comprend une valeur d'échantillon, et
une unité de combinaison (170) destinée à combiner le premier signal d'utilisateur unique manipulé et le deuxième signal d'utilisateur manipulé pour obtenir le signal multi-utilisateur,
dans lequel le module de manipulation (130) du premier appareil est configuré pour appliquer une première séquence de permutation aux valeurs d'échantillons de deux ou plusieurs des premiers échantillons dans le domaine temporel du premier signal dans le domaine temporel transformé,
dans lequel le module de manipulation (131) du deuxième appareil est configuré pour appliquer une deuxième séquence de permutation aux valeurs d'échantillons de deux ou plusieurs des deuxièmes échantillons dans le domaine temporel du deuxième signal dans le domaine temporel transformé, et
dans lequel la première séquence de permutation est différente de la deuxième séquence de permutation.

9. Appareil selon la revendication 8,
dans lequel l'unité de transformation (120) du premier appareil est configurée pour transformer les une ou plusieurs premières sous-porteuses et les une ou plusieurs deuxièmes sous-porteuses au domaine temporel à l'aide d'une Transformée de Fourier Rapide Inverse à M points,
dans lequel le module de manipulation (130) du premier appareil est configuré pour appliquer la séquence de permutation en fonction de la valeur M de la Transformée de Fourier Rapide Inverse à M points,
dans lequel l'unité de transformation (121) du deuxième appareil est configurée pour transformer les une ou plusieurs premières sous-porteuses et les une ou plusieurs deuxièmes sous-porteuses au domaine temporel à l'aide de la Transformée de Fourier Rapide Inverse à M points,
dans lequel le module de manipulation (131) du deuxième appareil est configuré pour appliquer la séquence de permutation en fonction de la valeur M de la Transformée de Fourier Rapide Inverse à M points.

10. Appareil selon la revendication 8 ou 9, dans lequel l'appareil est configuré pour utiliser une signalisation de Transformée de Fourier Rapide Permutée, dans lequel l'appareil est configuré pour communiquer des séquences de décodeur spécifiques à l'utilisateur à une pluralité d'utilisateurs.

11. Système, comprenant:

un appareil (100) selon l'une des revendications 1 à 10 pour générer un signal dans le domaine temporel manipulé, et

un appareil (200) pour démoduler un signal dans le domaine temporel reçu,

dans lequel l'appareil (100) pour générer le signal dans le domaine temporel manipulé comprend un transmetteur (180) destiné à transmettre le signal dans le domaine temporel manipulé,

dans lequel l'appareil (200) destiné à démoduler le signal dans le domaine temporel reçu comprend un récepteur (240) destiné à recevoir le signal dans le domaine temporel manipulé, lequel est transmis par le transmetteur (180) de l'appareil (100) pour générer signal dans le domaine temporel manipulé comme signal dans le domaine temporel reçu,

dans lequel l'appareil (200) destiné à démoduler le signal dans le domaine temporel reçu est configuré pour démoduler le signal dans le domaine temporel reçu pour obtenir une pluralité de symboles de données, où le signal dans le domaine temporel transformé a été généré en modulant les symboles de données sur une ou plusieurs premières sous-porteuses, et en ne modulant pas les symboles de données sur une ou plusieurs deuxièmes sous-porteuses, en transformant les une ou plusieurs premières sous-porteuses et les une ou plusieurs deuxièmes sous-porteuses à un domaine temporel pour obtenir un signal dans le domaine temporel transformé, et en modifiant de manière réversible le signal dans le domaine temporel transformé selon la première règle de modification pour générer le signal dans le domaine temporel reçu,

dans lequel l'appareil pour démoduler le signal dans le domaine temporel reçu comprend par ailleurs un manipulateur inverse (210; 415; 710), un transformateur inverse (220; 450; 720) et une unité de démodulation (230; 460; 730) destinée à démoduler les une ou plusieurs premières sous-porteuses pour obtenir la pluralité de symboles de données,

dans lequel le manipulateur inverse (210; 415; 710) est configuré pour modifier le signal dans le domaine temporel reçu selon une deuxième règle de modification, qui est une règle inverse à la première règle de modification, pour obtenir le signal dans le domaine temporel manipulé, et le transformateur inverse (220; 450; 720) est configuré pour transformer le signal dans le domaine temporel manipulé d'un domaine temporel à un domaine spectral pour obtenir les une ou plusieurs premières sous-porteuses, ou

dans lequel le transformateur inverse (220; 450; 720) est configuré pour transformer le signal dans le domaine temporel reçu d'un domaine temporel à un domaine spectral pour obtenir un signal dans le domaine spectral intermédiaire, et le manipulateur inverse (210; 415; 710) est configuré pour modifier le signal dans le domaine spectral intermédiaire selon une deuxième règle de modification, qui est une règle inverse à la première règle de modification, pour obtenir les une ou plusieurs premières sous-porteuses.

12. Système selon la revendication 11, dans lequel l'appareil (200) destiné à démoduler le signal dans le domaine temporel reçu est configuré pour éliminer un préfixe cyclique du signal dans le domaine temporel reçu pour obtenir un signal dans le domaine temporel intermédiaire.

13. Procédé de génération d'un signal dans le domaine temporel manipulé pour la transmission d'une pluralité de symboles de données, comprenant le fait de:

moduler les symboles de données sur une ou plusieurs premières sous-porteuses, et ne pas charger les symboles de données sur une ou plusieurs deuxièmes sous-porteuses, où chacune des une ou plusieurs deuxièmes sous-porteuses est différente de chacune des une ou plusieurs premières sous-porteuses,

transformer, par une unité de transformation, les une ou plusieurs premières sous-porteuses et les une ou plusieurs deuxièmes sous-porteuses à un domaine temporel pour obtenir un signal dans le domaine temporel transformé,

modifier de manière réversible le signal dans le domaine temporel transformé selon une première règle de modification pour obtenir le signal dans le domaine temporel manipulé,

dans lequel la modification de manière réversible du signal dans le domaine temporel transformé selon la première règle de modification est réalisée en appliquant une matrice de permutation, et

dans lequel un nombre desdites une ou plusieurs premières sous-porteuses est sélectionné de sorte que le signal à une entrée de l'unité de transformation soit rendu clairsemé.

14. Procédé selon la revendication 13, dans lequel le signal dans le domaine temporel transformé comprend une pluralité d'échantillons, où chacun des échantillons dans le domaine temporel comprend une valeur d'échantillon, dans lequel la modification de manière réversible est effectuée en modifiant de manière réversible le signal dans le domaine temporel transformé selon la première règle de modification en appliquant la matrice de permutation aux valeurs d'échantillon de deux ou plusieurs échantillons dans le domaine temporel du signal dans le domaine temporel transformé, de sorte que la valeur d'échantillon de chacun des deux ou plusieurs échantillons dans le domaine temporel soit attribuée à un échantillon dans le domaine temporel différent des deux ou plusieurs échantillons dans le domaine temporel pour obtenir une valeur d'échantillon pour deux ou plusieurs échantillons dans le domaine temporel d'un signal dans le domaine temporel intermédiaire.

15. Programme d'ordinateur comprenant des instructions qui, lorsque le programme est exécuté par un ordinateur, font que l'ordinateur mette en oeuvre le procédé selon la revendication 13 ou 14.

FIG 1A

EP 2 797 274 B1

FIG 1B

received
time-domain
signal

220

inverse
transformer

intermediate
spectral-domain
signal

210

inverse
manipulator

1$^{st}$ subcarrier(s)

230

demodulation
unit

data
symbol(s)

**FIG 1C**

FIG 1D

EP 2 797 274 B1

EP 2 797 274 B1

**FIG 1E**

EP 2 797 274 B1

FIG 1F

EP 2 797 274 B1

```
       212
   ┌──────────┐
   │ internet │
   └──────────┘
       214                     222              232                 242                 252
   ┌──────────┐           ┌──────────┐    ┌──────────┐     ┌──────────────┐    ┌──────────────┐
   │  voice   │           │secondary │    │secondary │     │ congestion   │    │  physical    │
   └──────────┘           │ backbone │    │  base    │     │ and medium   │    │  interface   │
       216                └──────────┘    │ station  │     │access control│    │    PFFT      │
   ┌──────────────┐                       └──────────┘     │for secondary │    └──────────────┘
   │ data services│                                        └──────────────┘
   └──────────────┘
```

FIG 2

FIG 3

inverse manipulator

| | 420 | 430 | 440 | | 450 | 460 |

410

Rx signal — remove CP — channel equalizer based on impulse response — decoder G — FFT — detect and code decode

415

FIG 4

EP 2 797 274 B1

FIG 5

Rx signal → remove CP → FFT → channel equalizer based on frequency response → detect and decode →

FIG 6

EP 2 797 274 B1

inverse manipulator | demodulation unit

705 | 720

| Rx signal | → | remove CP | → | FFT | → | channel equalizer based on frequency response | → | PFFT equalise $\Omega$ | → | extract user sparse signal part | → | decode user data | → |

710

730

**FIG 7**

EP 2 797 274 B1

FIG 8

FIG 9

EP 2 797 274 B1

```
Rx signal → remove CP → FFT → channel equalizer based on frequency response → PFFT equalise Ω_CSG → extract user sparse signal part → decode user data →
```

FIG 10

Rx signal → remove CP → FFT → channel equalizer based on frequency response → PFFT equalise sequence m' $[P_{m'}]^{-1}$ → extract decode set of users using $[\Pi_{m'}]^{-1}$ from sparse signal part → subtract set of decoded users from rx signal

find next sequence m' based on decoding order

**FIG 11**

FIG 12

FIG 13

FIG 14

FIG 15

FIG 16

EP 2 797 274 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AL-DWEIK et al.** *Joint Secured and Robust Technique for OFDM Systems,* 10 December 2012, http://arxiv.org/abs/1212.1969